# EUROPÄISCHE PATENTSCHRIFT

(11) **EP 3 593 214 B1**
(45) Veröffentlichungstag und Bekanntmachung des Hinweises auf die Patenterteilung: **23.08.2023**
(21) Anmeldenummer: 18706262.5
(22) Anmeldetag: 20.02.2018
(51) Int. Cl.: G05B 19/418, B65G 47/00

(54) **VERFAHREN UND VORRICHTUNG ZUM BEHANDELN VON BEHÄLTERN**
METHOD AND DEVICE FOR HANDLING CONTAINERS
PROCÉDÉ ET DISPOSITIF DE MANIPULATION DE RÉCIPIENTS

(30) Priorität: 10.03.2017 DE 102017203965
(43) Veröffentlichungstag der Anmeldung: 15.01.2020
(73) Patentinhaber: Krones AG, 93073 Neutraubling (DE)
(72) Erfinder: HAHN, Wolfgang, 93073 Neutraubling (DE); RISSE, Norbert, 93073 Neutraubling (DE); WOELFEL, Heinz, 93073 Neutraubling (DE)
(74) Vertreter: Grünecker Patent- und Rechtsanwälte PartG mbB
(86) Internationale Anmeldenummer: PCT/EP2018/054139
(87) Internationale Veröffentlichungsnummer: WO 2018/162226

(56) Entgegenhaltungen:
- DE-A1-102013 108 177
- DE-A1-102015 202 660
- DE-A1-102015 211 380

## Beschreibung

Die Erfindung betrifft ein Verfahren und eine Vorrichtung zum Behandeln von Behältern gemäß den Oberbegriffen der Ansprüche 1 und 10.

Behälterbehandlungsmaschinen übergeben die behandelten Behälter in der Regel an eine Transporteinrichtung, auf der die behandelten Behälter zu einer weiteren Behälterbehandlungsmaschine transportiert werden.

Bei einer Umstellung der Produktion auf einen Behälter einer anderen Sorte, d.h. mit abweichender Behältergeometrie und/oder anderem Produkt müssen viele Umstellvorgänge zur Umstellung der Behälterbehandlungsmaschinen auf diesen neuen Behältertyp durchgeführt werden. Dazu gehört auch das Leerfahren der Maschine sowie das Befüllen der Maschine mit dem neuen Behälter und gegebenenfalls auch ein Testlauf mit dem neuen Behälter. Diese Vorgänge erfolgen oftmals nicht automatisch sondern erfordern einen Bedienereingriff. Es ist auch möglich, dass diese Vorgänge mit geringerer Leistung/Geschwindigkeit der Maschine erfolgen müssen oder mit einem Tipptaster ausgelöst werden. Dadurch wird dem Bediener ermöglicht, bei Bedarf einzugreifen bzw. beim Tippbetrieb den Ablauf stillzusetzen. Auch ein automatisches Umrüsten ist möglich.

Erfolgt an einer Maschine z.B. ein Block mit Blasmaschine, Etikettiermaschine und Füller/Verschließer nur eine Umstellung des Getränks, ist der Umstellvorgang nach sehr kurzer Zeit, z.B. 10 min, abgeschlossen. Der Block könnte dann theoretisch produzieren. Da sich im Zulauf der nachfolgenden Maschine, z.B. einem Einwegpacker, noch Behälter der vorhergehenden Produktion befinden können, z.B. weil der Einwegpacker vom Bediener noch nicht komplett leergefahren wurde, ist die Freigabe vom Packer für die neue Produktion am Block noch nicht erteilt. Grund für die nicht erteilte Freigabe ist, dass eine Vermischung von Behältern der ersten Sorte und den Behältern der zweiten Sorte auf einer Transportstrecke sicher vermieden werden muss.

Obwohl der Block also produktionsbereit ist, kann er daher nicht mit der Produktion beginnen. Es entsteht also eine Zeitverzögerung und ein Produktionsverlust, der nicht mehr kompensiert werden kann.

Ein weiteres Beispiel ist der Transport von Packern, insbesondere Einwegpackern zum Palettierer. Wenn der Palettierer noch nicht produktionsbereit ist, kann der Einwegpacker noch nicht produzieren. Das kann ebenfalls zu einem Verlust an Produktionszeit führen.

DE102015211380 A1 offenbart ein Verfahren und eine Vorrichtung zum Abfüllen von Behältern, wobei Kästen mit leeren Behältern über eine Transporteinrichtung mindestens eine Behandlungsstation durchlaufen, wobei die Transporteinrichtung mindestens eine Trenneinrichtung umfasst.

Hiervon ausgehend liegt der vorliegenden Erfindung die Aufgabe zugrunde, ein Verfahren und eine Vorrichtung zum Behandeln von Behältern bereitzustellen, die beim Wechsel von Behältern einer ersten Sorte A auf eine zweite Sorte B Produktionsverluste der Anlage weitgehend vermeiden und eine höhere Anlagenverfügbarkeit ermöglichen.

Erfindungsgemäß wird die Aufgabe durch die Merkmale der Ansprüche 1 und 10 gelöst. Gemäß der Erfindung werden Behälter mit mindestens zwei Behandlungsmaschinen behandelt. Zwischen den Behandlungsmaschinen befindet sich eine Transporteinrichtung zum Transport der Behälter. Beim Wechseln von einem Behälter der Sorte A auf einen Behälter der Sorte B wird gemäß der vorliegenden Erfindung eine Trenneinrichtung zwischen einem ersten und einem zweiten Transportabschnitt aktiviert, wobei die Trenneinrichtung den Behälterstrom zwischen dem ersten und zweiten Transportabschnitt trennt. Die Trenneinrichtung wird aktiviert, nachdem der erste Transportabschnitt von Behältern der Sorte A leergefahren ist. Dabei grenzen die Transportabschnitte in Transportrichtung der Transporteure direkt aneinander an.

Unter Behälter versteht man in dieser Anmeldung Einzelbehälter oder aber auch einen Behälterverbund, z.B. ein Gebinde. Die Behälter der Sorte A unterscheiden sich von den Behältern der Sorte B beispielsweise durch das abgefüllte Produkt oder aber auch die Form bzw. Geometrie des Behälters und einer daraus resultierenden unterschiedlichen Gebindegröße oder Gebindeform. Die Trenneinrichtung kann also den Behälterstrom unterschiedlicher Behälter wirksam trennen, da Behälter der Sorte B vor der Trenneinrichtung aufgestaut werden. Da die Trenneinrichtung erst aktiviert wird, wenn der erste Behälterabschnitt bereits keine Behälter der Sorte A mehr aufweist, kann sichergestellt werden, dass es zu keiner Vermischung der Behälter der Sorte A und B kommt. Auch wenn es zu einer Störung in einer nachfolgenden Einheit, zum Beispiel der nachfolgenden Behälterbehandlungsmaschine oder den vorgeschalteten Transporteuren kommt, kommt es bei einer Aufstauung zu keiner Vermischung der beiden Sorten. Deswegen ist es möglich, dass bereits Behälter der zweiten Sorte B in den ersten Transportabschnitt gefördert werden, während sich noch Behälter der ersten Sorte A in dem zweiten Transportabschnitt befinden und aus diesem Transportabschnitt hinaus gefördert werden. Das bedeutet, dass die erste Behälterbehandlungsmaschine bereits zur Produktion freigegeben wird, wenn die zweite Behälterbehandlungsmaschine noch nicht leergefahren ist. Dies führt zu einer wesentlichen Zeitersparnis, da, wenn der Umstellvorgang der ersten Behälterbehandlungsmaschine relativ rasch vonstattengeht, wenn beispielsweise nur das abgefüllte Produkt und eine entsprechende Etikettierung etc. umgestellt wird, unmittelbar nach dem Umrüsten mit der Produktion ohne lange Wartezeit begonnen werden kann. Am sichersten ist es, dass eine Freigabe der ersten Behälterbehandlungsmaschine erst dann erfolgt, wenn die Trenneinrichtung bereits aktiviert ist. Es ist aber auch möglich, insbesondere bei einem längeren ersten Transportabschnitt, dass direkt nach dem Umstellvorgang eine Freigabe der ersten Behälterbehandlungsmaschine erfolgt, bevor die Trenneinrichtung aktiviert wurde. Wesentlich ist jedoch, dass die Trenneinrichtung aktiviert wird, nachdem die erste Transportstrecke von Behältern der Sorte A leergefahren ist und bevor ein Behälter der zweiten Sorte B den ersten Transportabschnitt verlässt. Der Zeitpunkt, wann sich der erste Behälter der zweiten Sorte B noch auf dem ersten Transportabschnitt befindet, kann zum Beispiel über den Zeitpunkt des Produktionsbeginns der ersten Behälterbehandlungsmaschine sowie die Fördergeschwindigkeit und den Förderweg ermittelt werden.

Die Trenneinrichtung zwischen dem ersten und zweiten Transportabschnitt kann nachfolgend wieder deaktiviert werden derart, dass die aufgestauten und nachfolgenden Behälter der Sorte B durch den zweiten Transportabschnitt zur d.h. in Richtung auf die zweite Behälterbehandlungsmaschine transportiert werden. Die Behälter der zweiten Sorte durchlaufen dabei den gesamten zweiten Transportabschnitt.

Die vorliegende Erfindung ermöglicht, dass sehr rasch nach dem Umstellen der ersten Behälterbehandlungsmaschine mit der Produktion begonnen werden kann und dennoch durch die Trenneinrichtung ein Vermischen der Behälter der Sorten A und der Behälter der Sorte B verhindert werden kann. Der Verlust an Produktionszeit beim Umstellen kann somit wirksam minimiert werden und die Anlagenverfügbarkeit erhöht werden. Die Erfindung kann einfach mit einem einzigen Transportpfad realisiert werden, also ohne die Verwendung von Weichen und parallelen Pfaden und Sekundärpuffern.

Erfindungsgemäß , wird die Trenneinrichtung deaktiviert, nachdem der zweite Transportabschnitt von den Behältern der Sorte A leergefahren ist. Somit ist ein ausreichender Abstand zwischen den unterschiedlichen Sorten sichergestellt und selbst bei Störungen kommt es zu keiner Vermischung.

Gemäß einem Ausführungsbeispiel wird die Trenneinrichtung zusätzlich erst dann deaktiviert, wenn die zweite Behälterbehandlungsmaschine gerüstet ist, um die Behälter der Sorte B zu behandeln. Dazu kann die Maschine beispielsweise ein entsprechendes Signal an eine Steuereinrichtung, die ebenfalls die Trenneinrichtung ansteuert, ausgeben. Dies ist insbesondere vorteilhaft, wenn sich die Trenneinrichtung relativ nahe an der 2. Behälterbehandlungsmaschine befindet. Somit ist ein einwandfreier Betrieb gewährleistet.

Es ist auch möglich, insbesondere bei längeren Transportstrecken, dass zwischen der ersten und zweiten Behandlungsmaschine mehrere Trenneinrichtungen vorgesehen sind, wobei insbesondere nach dem n+1ten Transportabschnitt ein weiterer n+2ter Transportabschnitt vorgesehen ist, wobei eine n+1te Trenneinrichtung zwischen dem n+1ten und n+2ten Transportabschnitt aktiviert wird, nachdem der n+1te Transportabschnitt von den Behältern der Sorte A leergelaufen ist und

Behälter der zweiten Sorte in den n+1ten Transportabschnitt gefördert werden, während Behälter der Sorte A aus dem n+2ten Transportabschnitt heraus transportiert werden, wobei vorzugsweise die n+1te Trenneinrichtung deaktiviert wird, wenn die n+2te Transportstrecke leergefahren ist (und vorzugsweise gleichzeitig die zweite Behälterbehandlungsmaschine bereit für Behälter der Sorte B ist). Die Transportabschnitte sind in Transportrichtung hintereinander angrenzend angeordnet. Das bedeutet insbesondere, dass ein nachfolgender Transportabschnitt am Ende des vorhergehenden Transportabschnitt angeordnet ist.

Das bedeutet, dass beispielsweise eine n+1te Trenneinrichtung z.B. zweite Trenneinrichtung aktiviert wird, wenn der ihr vorauseilende Transportabschnitt von der Behältersorte A leergefahren ist. Dabei kann beispielsweise der n+1te Transportabschnitt, d.h. der zweite Transportabschnitt der n+1ten, z.B. zweiten Transporteinrichtung dem zweiten Transportabschnitt einer ersten Trenneinrichtung entsprechen. Der Vorteil von mehreren Trenneinrichtungen liegt darin, dass die Puffergröße bei den einzelnen Trenneinrichtungen im Vergleich zu einer einzigen Trenneinrichtung kleiner gewählt werden kann, da sich die Puffer entlang der Transportstrecke aufteilen.

Es ist besonders vorteilhaft, dass während die Trenneinrichtung aktiviert ist, sich Produkte der zweiten Sorte B vor der Trenneinrichtung aufstauen. Dazu kann eine bestimmte Staustrecke vorgesehen sein, die die aufgestauten Behälter aufnimmt.

Die Trenneinrichtung umfasst einen Transporteur zwischen erstem und zweitem Transportabschnitt bzw. zwischen dem nten und n+1ten Transportabschnitt, der bei Aktivieren der Trenneinrichtung stillsteht, so dass sich die Behälter auf und vor dem Transporteur aufstauen. Das ist besonders einfach zu realisieren und kann die Behälter besonders schonend aufstauen.

Die Transporteinrichtung umfasst mehrere einzeln ansteuerbare Transporteure, wobei die mindestens eine Trenneinrichtung einen der Transporteure umfasst, der bei Aktivierung der Trenneinrichtung derart stoppt, dass sich die Behälter aufstauen, wobei der als Trenneinrichtung fungierende Transporteur im Endbereich (das heißt dem der ersten Behälterbehandlungsmaschine abgewandten Ende) des jeweiligen Transportabschnitts angeordnet ist oder die Transportstrecke des Transporteurs dem Transportabschnitt entspricht. Wenn jeweils ein bestimmter Transporteur einer jeweiligen Trenneinrichtung zugeordnet ist, weisen die mindestens zwei Transportabschnitte jeweils eine vorbestimmte Länge und eine vorbestimmte Lage auf.

Erfindungsgemäß sind mehrere Transportabschnitte vorgesehen, die jeweils der Transportstrecke aufeinanderfolgender Transporteure entsprechen. Das heißt, dass die Länge des Transportabschnitts der Transportstrecke des Transporteurs entspricht. Somit sind mehrere kürzere Transportabschnitte vorgesehen. Dann kann, wenn die Transporteure von Behältern der Sorte A jeweils leergefahren sind, der jeweils leergefahrene Transporteur, der sich in Transportrichtung an vorderster Stelle hinter den Behältern der Sorte A befindet gestoppt werden, bis der in Transportrichtung folgende Transporteur von Behältern der Sorte A leergefahren ist, der dann wiederum gestoppt wird, wobei der vorherige Transporteur wieder in Betrieb genommen wird. Das ist besonders geeignet für Transportstrecken, die nicht für den Staubetrieb vorgesehen sind. Erfindungsgemäß folgen also die aktivierten Trenneinrichtungen der Bewegung der Gebinde der ersten Sorte A.

Alternativ oder zusätzlich wäre es auch möglich, dass die Trenneinrichtung ein mechanisches Aufstauelement umfasst, das in den Transportweg der Behälter eingebracht wird.

Ein entsprechendes Aufstauelement kann beispielsweise derart realisiert werden, dass ein Stopper mit einem pneumatischen Zylinder auf den Transporteur schwenkt, der die ankommenden Artikel stoppt. Die Verwendung des Transporteurs als Teil der Trenneinrichtung ist jedoch vorteilhaft, da zwischen einer ersten und zweiten Behältermaschine meist ohnehin mehrere Transporteure, die getrennt voneinander ansteuerbar sind, vorgesehen sind.

Gemäß einem bevorzugten Ausführungsbeispiel unterscheiden sich die Behälter der ersten Sorte A und die Behälter der zweiten Sorte B nur so weit, dass die gleiche Transporteinrichtung zwischen der ersten Behälterbehandlungsmaschine und der zweiten Behälterbehandlungsmaschine verwendet werden kann. Dies ist insbesondere dann der Fall, wenn zwar die gleichen Behälter - lediglich mit anderer Lebensmittelfüllung - verwendet werden. Bei entsprechenden Behältern ist dann auch die Umrüstarbeit an den Behälterbehandlungsmaschinen kleiner, so dass beispielsweise die erste Behälterbehandlungsmaschine relativ rasch zur Verfügung steht. Dann ist es besonders vorteilhaft, wenn bereits vor dem Leerlaufen der zweiten Behälterbehandlungsmaschine mit der Produktion der Behälter der Sorte B begonnen werden kann und die Behälter der Sorte B dann vor der Trenneinrichtung aufgestaut werden können.

Gemäß einem bevorzugten Ausführungsbeispiel kann über mindestens einen Sensor an dem ersten und/oder zweiten (bzw. n + 1ten)Transportabschnitt) ermittelt werden, ob sich Behälter der ersten Sorte A in dem ersten und/oder zweiten (bzw. n+1ten) Transportabschnitt befinden. Dabei gibt es unterschiedliche Möglichkeiten. Beispielsweise kann zur Ermittlung der Behälter auf dem ersten und zweiten Transportabschnitt über eine Zähleinrichtung die Anzahl der auf den ersten und/oder zweiten (bzw. n+1ten) Transportabschnitt einlaufenden Behälter der Sorte A und die Anzahl der von dem ersten und/oder zweiten (bzw. n+1ten) Transportabschnitt auslaufenden Behälter der Sorte A gezählt werden, die Differenz bestimmt werden und damit die Anzahl der sich auf dem ersten und/oder zweiten (bzw. n+1ten) Transportabschnitt befindlichen Behälter ermittelt werden. Dies ist nur ein Beispiel wie unter Verwendung von Sensoren oder Zähleinrichtungen entsprechendes ermittelt werden kann.

Vorteilhafterweise erzeugt die erste Behälterbehandlungsmaschine ein Signal für das Ende der Produktion von Behältern der Sorte A und leitet dieses Signal an die Steuereinrichtung. In Abhängigkeit dieses Signals kann dann ermittelt werden, ob sich Behälter der Sorte A auf dem ersten oder zweiten (bzw. n+1ten) Transportabschnitt befinden oder ob der erste Transportabschnitt frei von Behältern der Sorte A ist. Insbesondere kann auch der letzte Behälter der Sorte A, der von der ersten Behälterbehandlungsmaschine produziert wurde, verfolgt werden, da die Transportgeschwindigkeit, die Transportstrecke und somit die theoretische Zeit für den Transport des Behälters bekannt ist bzw. hinterlegt ist. So kann auch abgeleitet werden, ob dieser letzte Behälter in jedem Fall den ersten Transportabschnitt durchlaufen hat und sich nicht noch in diesem Bereich befindet. Es können auch mehrere Informationen, beispielsweise Sensorinformationen, theoretisch ermittelte Positionen eines letzten Behälters etc. miteinander verknüpft werden, um abzuleiten, dass eine Trenneinrichtung aktiviert werden kann und um gegebenenfalls beispielsweise abzuleiten, dass die zweite Behälterbehandlungsmaschine leerlaufen kann und umgerüstet werden kann, wenn sich kein Behälter der Sorte A mehr auf den Transportabschnitten zwischen der ersten Behälterbehandlungsmaschine und der zweiten Behälterbehandlungsmaschine befindet.

Eine Vorrichtung zur Durchführung des erfindungsgemäßen Verfahrens umfasst mindestens eine erste und eine zweite Behandlungsmaschine. Zwischen der ersten und zweiten Behälterbehandlungsmaschine ist eine Transporteinrichtung mit mindestens zwei Transportabschnitten vorgesehen. Dabei kann die Transporteinrichtung beispielsweise mehrere in Reihe angeordnete Transporteure umfassen. Ferner umfasst die Vorrichtung eine Trenneinrichtung zwischen der ersten und zweiten Behälterbehandlungsmaschine, die bei Aktivierung den Behälterstrom zwischen der ersten und zweiten Behälterbehandlungsmaschine abtrennen kann, so dass keine Behälter von dem ersten Transportabschnitt in den zweiten Transportabschnitt transportiert werden können.

Ferner umfasst die Vorrichtung eine Steuereinrichtung, die derart ausgebildet ist, dass sie beim Wechseln von Behältern der Sorte A auf Behälter der Sorte B die Trenneinrichtung zwischen einem ersten und zweiten Trennabschnitt aktivieren kann, derart, dass dem ersten Transportabschnitt schon Behälter der Sorte B zugeführt werden können, während gleichzeitig ohne Vermischung der Behälter der Sorte A und B Behälter der Sorte A aus dem zweiten Transportabschnitt hinaus gefördert werden können, wobei die Steuereinrichtung dann das Trennelement wieder deaktivieren kann, damit die Behälter der Sorte B über den zweiten Transportabschnitt zur zweiten Behälterbehandlungsmaschine transportiert werden können.

Wie bereits vorab ausgeführt, ermöglicht die Trenneinrichtung eine Trennung unterschiedlicher Behälter im Behälterstrom. Es ist vorteilhaft, dass der erste Bereich mit Behältern der Sorte B gefüllt werden kann, während gleichzeitig der zweite Transportabschnitt von Behältern der Sorte A geleert werden kann, ohne dass sich die Behälter vermischen und/oder aufeinander fahren bzw. aufstauen.

Vorteilhafterweise umfasst die Vorrichtung mehrere Trenneinrichtungen, die hintereinander angeordnet sind und durch entsprechende Transportabschnitte voneinander getrennt sind.

Weiter umfasst die Vorrichtung eine Erfassungseinrichtung, die erfasst, ob beim Produktwechsel der erste Transportabschnitt von Behältern der Sorte A leergefahren ist und die bei leergefahrenem ersten Transportabschnitt (d.h. dem Transportabschnitt, der vor der Trenneinrichtung angeordnet ist - zum Beispiel bei mehreren Trenneinrichtungen) ein Signal erzeugt, auf dessen Grundlage die Steuereinrichtung die Trenneinrichtung aktiviert. Die Vorrichtung kann auch eine zweite Erfassungseinrichtung aufweisen, die erfassen kann, ob der zweite Transportabschnitt (das heißt der Transportabschnitt, der unmittelbar nach der Trenneinrichtung angeordnet ist-zum Beispiel bei mehreren Trenneinrichtungen) leergefahren ist und bei leergefahrener zweiter Transportstrecke ein Signal erzeugt, auf dessen Grundlage die Steuereinrichtung die Trenneinrichtung deaktiviert oder aber die Steuereinrichtung die Trenneinrichtung deaktiviert, wenn ein Signal erzeugt wird, dass der zweite Transportabschnitt leergefahren ist und ein Signal von der zweiten Behälterbehandlungsmaschine ausgegeben wird, dass die zweite Behälterbehandlungsmaschine bereit ist, die Behälter des Typs B zu behandeln.

Gemäß einer besonders bevorzugten Ausführungsform ist zwischen der ersten und zweiten Behälterbehandlungsmaschine eine Wärme- oder Kühleinrichtung angeordnet und vorzugsweise eine Trenneinrichtung vor der Wärme- oder Kühleinrichtung angeordnet und/oder eine weitere Trenneinrichtung nach der Wärme- oder Kühleinrichtung. Eine entsprechende Wärme- oder Kühleinrichtung ist beispielsweise ein Pasteur, eine Einrichtung zum Aufwärmen der Produkte beispielsweise zum Verhindern von Kondenswasser oder aber eine Kühleinrichtung zum Kühlen von heiß abgefüllten Produkten. Es ist insbesondere vorteilhaft, eine Trenneinrichtung vor der Wärme- oder Kühleinrichtung anzuordnen, da die Transportgeschwindigkeit in der Wärme- oder Kühleinrichtung ohnehin sehr gering ist und die Verweilzeit in dieser Einrichtung groß ist. Es ist besonders vorteilhaft, wenn die Trenneinrichtung unmittelbar vor dem Einlauf der Wärme- oder Kühleinrichtung angeordnet ist.

Es ist sehr vorteilhaft, wenn die Transporteinrichtung zwischen der ersten und zweiten Behälterbehandlungsmaschine mehrere einzeln ansteuerbare Transporteure aufweist. Die Trenneinrichtung umfasst einen Transporteur, der zum Beispiel zwischen dem ersten Transportabschnitt und dem zweiten Transportabschnitt angeordnet ist und der bei Aktivierung der Trenneinrichtung stoppt, derart, dass die darauf zulaufenden Behälter vor dem Transporteur aufgestaut werden. Eine entsprechende Ausführungsform ist besonders einfach und kostengünstig zu realisieren.

Gemäß der vorliegenden Erfindung ist die mindestens eine Behälterbehandlungsmaschine mindestens eine Maschine der folgenden Gruppe: Streckblasmaschine, Füller, Etikettiermaschine, Packer, Palettierer, Abschieber. Mindestens eine Maschine bedeutet hier, dass eine erste Behälterbehandlungsmaschine oder zweite Behälterbehandlungsmaschine auch ein Block aus mehreren Einzelmaschinen sein kann. Gemäß der vorliegenden Erfindung ist die erste Maschine vorzugsweise ein Block, der eine Blasmaschine, Etikettiermaschine, einen Füller und einen Verschließer umfasst und die zweite Behälterbehandlungsmaschine ein Packer oder ein Palettierer.

Auch eine Ausführungsform ist vorteilhaft, bei der die erste Behälterbehandlungsmaschine ein Packer ist und die zweite Behälterbehandlungsmaschine ein Palettierer.

Die vorliegende Erfindung wird nachfolgend unter Bezugnahme der folgenden Figuren näher erläutert:
- Fig. 1-11: zeigen grob schematisch ein erstes Ausführungsbeispiel gemäß der vorliegenden Erfindung.
- Fig. 12-20: zeigen grob schematisch ein zweites Ausführungsbeispiel gemäß der vorliegenden Erfindung mit einem Wärmer.
- Fig. 21a-d: zeigen grob schematisch ein weiteres Ausführungsbeispiel gemäß der vorliegenden Erfindung.
- Fig. 22-26: zeigen eine Vorrichtung gemäß der vorliegenden Erfindung anhand einer PET-Linie.

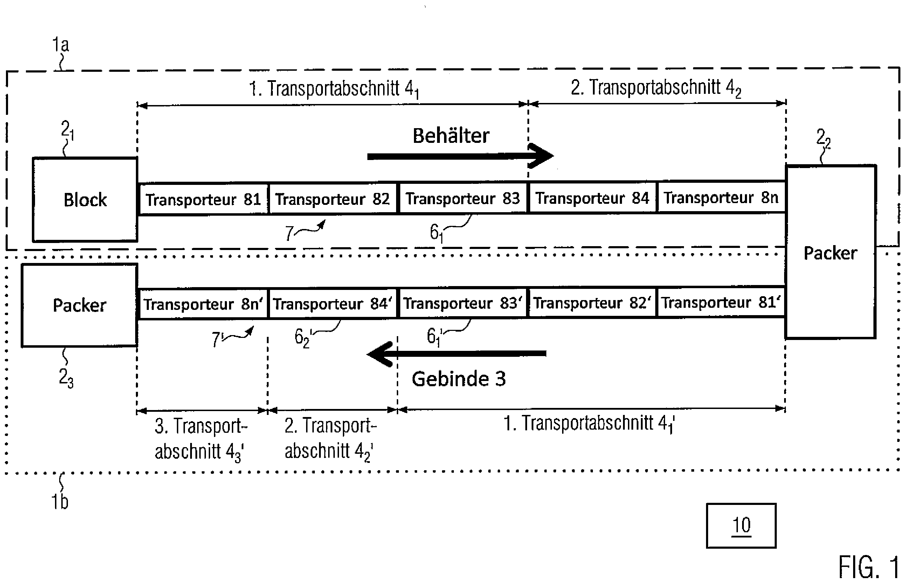

Fig. 1 zeigt grob schematisch zwei aneinandergereihte Vorrichtungen 1a, 1b gemäß der vorliegenden Erfindung. Die Vorrichtung 1a gemäß der vorliegenden Erfindung zeigt eine erste Behälterbehandlungsmaschine 2₁, hier z.B. einen Behälterbehandlungsblock, der z.B. einen Füller und einen Verschließer umfasst oder aber gemäß einem bevorzugten Ausführungsbeispiel eine Streckblasmaschine, einen Füller, eine Etikettiermaschine sowie einen Verschließer. Weiter umfasst die Vorrichtung 1a einen Packer 2₂ beispielsweise zum Herstellen von Gebinden. Zwischen der ersten und der zweiten Behälterbehandlungsmaschine 2₁, 2₂ ist eine Transporteinrichtung 7 angeordnet, die Behälter in einem Behälterstrom der der ersten Behälterbehandlungsmaschine 2₁ zur zweiten Behälterbehandlungsmaschine 2₂ transportiert. Die Transporteinrichtung kann mehrere unabhängig ansteuerbare einzelne Transporteure 8₁-8ₙ umfassen, wie beispielsweise Kettenförderer, Rollen- oder Gurtförderer, etc.

Bei dem in Fig. 1 gezeigten Ausführungsbeispiel ist ein erster Transportabschnitt 4₁ festgelegt, wobei in dem ersten Transportabschnitt 4₁ mehrere Transporteure, hier die Transporteure 8₁, 8₂ und 8₃ angeordnet sind. Ferner umfasst ein zweiter Transportabschnitt 4₂ mindestens einen weiteren Transporteur, hier die Transporteure 8₄ und 8ₙ. Schließlich umfasst die Vorrichtung eine Trenneinrichtung (6₁) zwischen der ersten und zweiten Behälterbehandlungsmaschine, die bei Aktivierung den Behälterstrom zwischen der ersten und zweiten Behälterbehandlungsmaschine 2₁, 2₂ in den ersten und zweiten Transportabschnitt 4₁, 4₂ trennt. Die Trennung erfolgt so, dass sich kein Behälter mehr von dem ersten in den zweiten Transportabschnitt und umgekehrt bewegen kann. In diesem Ausführungsbeispiel umfasst die Trenneinrichtung 6₁ den Transporteur 8₃, der sich im Endbereich des ersten Transportabschnitts 4₁ befindet, also der letzte Transporteur im Transportabschnitt ist. Bei Aktivierung der Trenneinrichtung stoppt dieser Transporteur, so dass sich die Behälter 3 vor dem Transporteur 8₃ aufstauen und nicht in den zweiten Transportabschnitt 4₂ laufen können. Die Trenneinrichtung kann alternativ auch ein mechanisches Aufstauelement umfassen, das in den Behälterstrom eingebracht werden kann. Ein entsprechendes Aufstauelement kann beispielsweise derart realisiert werden, dass ein Stopper mit einem pneumatischen Zylinder auf den Transporteur, hier z.B. am Ende des Transporteurs 8₃ schwenkt, der die ankommenden Behälter stoppt.

Ferner umfasst die Vorrichtung 1ₐ eine Steuereinrichtung 10, die derart ausgebildet ist, dass sie beim Wechseln von Behältern der Sorte A auf Behälter 3 der Sorte B die Trenneinrichtung 6₁ zwischen einem (nten) ersten und zweiten (n+1ten) Transportabschnitt 4₁, 4₂ aktivieren kann, wenn sich kein Behälter der Sorte A mehr auf dem ersten Transportabschnitt 4₁ befindet, derart, dass dem ersten Transportabschnitt schon Behälter 3 der Sorte B zugeführt werden können, während gleichzeitig ohne Vermischen der Behälter der Sorte A und B Behälter der Sorte A aus dem zweiten Transportabschnitt 4₂ hinaus gefördert werden können, was nachfolgend noch näher erläutert wird.

Die Steuereinrichtung ist so ausgebildet, dass sie die Trenneinrichtung 6₁ auch wieder deaktivieren kann, derart, dass die Behälter der Sorte B durch den zweiten Transportabschnitt 4₂ in Richtung auf die zweite Behälterbehandlungsmaschine 2₂ transportiert werden können.

Ferner umfasst die erfindungsgemäße Vorrichtung auch noch eine erste Erfassungseinrichtung, die erfassen kann, ob sich beispielsweise Behälter der Sorte A auf dem ersten Transportabschnitt und/oder dem zweiten oder n+1ten Transportabschnitt im Falle mehrerer Transportabschnitte befinden. Dazu ist mindestens ein nicht dargestellter Sensor an dem ersten und/oder zweiten Transportabschnitt oder im Falle mehrerer Transportabschnitte an dem n+1ten Transportabschnitt angeordnet. Die Position von den Behältern, beispielsweise Behältern der Sorte A, kann auch bestimmt werden, indem der letzte Behälter der Sorte A verfolgt wird. Dazu kann die Behälterbehandlungsmaschine 2₁ ein Signal für das Ende der Produktion von Behältern der Sorte A an die Steuereinrichtung 10 leiten, wobei in Abhängigkeit des Signals dann ermittelt werden kann, ob sich der Behälter auf dem ersten oder dem zweiten bzw. n+1ten Transportabschnitt befindet. Die Verfolgung der Behälter ist möglich, da anhand der bekannten Transportgeschwindigkeit und Transportstrecke eine entsprechende Position ermittelt werden kann. Vorausgesetzt ist dabei, dass auf dem Folgetransporteur kein Rückstau erkannt wurde.

Es ist auch möglich, dass zusätzlich oder alternativ zur Ermittlung der Behälter auf dem ersten und/oder zweiten (bzw. n+1ten) Transportabschnitt über eine Zähleinrichtung die Anzahl der auf dem ersten und/oder zweiten (bzw. n+ten) Transportabschnitt einlaufenden Behälter der Sorte A und die Anzahl der von dem ersten und/oder zweiten (bzw. n+1ten) Transportabschnitt auslaufenden Behältern der Sorte A gezählt werden, die Differenz bestimmt wird und damit die Anzahl der sich auf dem ersten und/oder zweiten (bzw. n+1ten) Transportabschnitt befindlichen Behälter ermittelt werden kann.

Die Position der Behälter der Sorte A oder B kann auch über Kameras im Bereich der Transportabschnitte ermittelt werden.

Dies sind nur Beispiele, wie unter Verwendung von Sensoren bzw. Zähleinrichtungen die Position der Behälter bestimmt werden können.

Fig. 1b zeigt eine zweite Vorrichtung gemäß der vorliegenden Erfindung, bei der der Packer 2₂ die erste Behälterbehandlungsmaschine darstellt und der Palettierer 2₃ die zweite Behälterbehandlungsmaschine. Dabei entspricht diese Vorrichtung der zuvor beschriebenen Vorrichtung 1a mit der Ausnahme, dass es hier z.B. drei Transportabschnitte 4'₁, 4'₂, 4'₃ gibt. Daher gibt es auch zwei Trenneinrichtungen 6'₁, 6'₂, wie nachfolgend noch näher erläutert wird.

Das erfindungsgemäße Verfahren zum Behandeln von Behältern beim Wechseln von Behältern der Sorte A auf Behälter der Sorte B wird nachfolgend im Detail beschrieben.

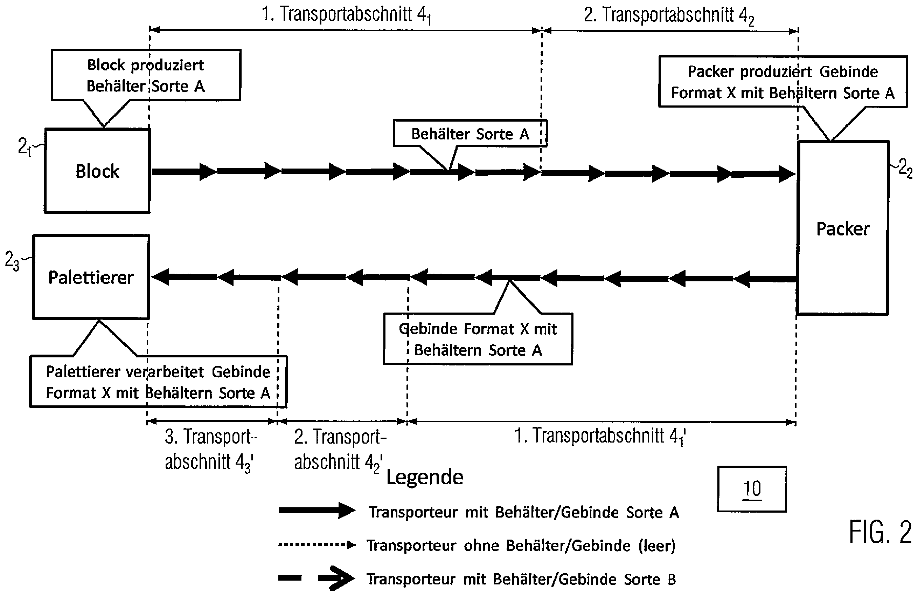

In der Behälterbehandlungsmaschine 2₁ werden beispielsweise mit einem bestimmten Getränk befüllte PET-Flaschen produziert, wobei die PET-Flaschen erzeugt, befüllt, etikettiert und verschlossen werden und dann über die Transporteinrichtung 7 zum Packer transportiert werden. Eine entsprechende Produktion von Behältern der Sorte A ist in Fig. 2 gezeigt. Die durchgehenden Pfeile stellen den Transport mit Behältern der Sorte A dar, die gepunkteten Linien stellen eine Transportstrecke ohne Behälter bzw. Gebinde dar (leer). Die gestrichelten Linien zeigen Behälter der Sorte B. Unter Behältern versteht man in dieser Anmeldung Einzelbehälter oder aber auch einen Behälterverbund, z.B. ein Gebinde (nach dem Packer).

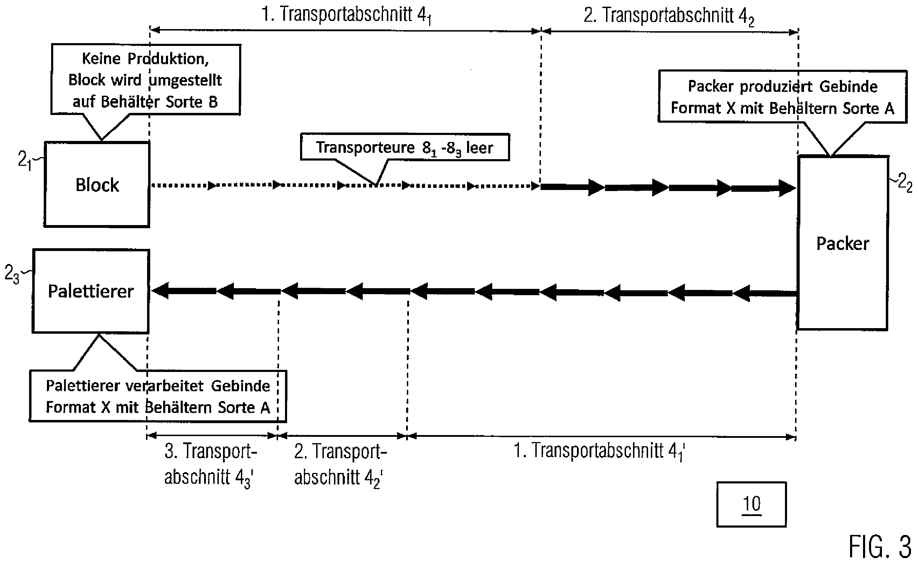

Beim Umstellen der Produktion von Behältern der Sorte A auf Behälter der Sorte B, die beispielsweise eine andere Form und/oder ein anderes Fassungsvolumen und/oder mit einem anderen Inhalt befüllt sind, muss die Behälterbehandlungsmaschine 2₁ entsprechend umgerüstet werde. Dazu wird zunächst die Maschine 2₁ gestoppt. Ein entsprechendes Signal kann an eine Steuereinrichtung 10 geleitet werden. Nach Produktionsende der Behälter der Sorte A läuft der erste Transportabschnitt 4₁ nach der Behälterbehandlungsmaschine 2₁ nach und nach leer, wobei sich der letzte Behälter 3_{E} in Richtung Packer bewegt, wie aus Figur 3 hervorgeht. Die Transporteurbelegung zwischen den Maschinen 2₁, 2₂ kann z.B. durch Zählen der ein- und auslaufenden Behälter 3, durch für die Steuerung 10 der Produktion vorhandene Sensoren, wie Lichtschranken und Stauschalter sowie durch einen Signalaustausch der Behälterbehandlungsmaschinen mit der Steuereinrichtung 10 (d.h. wann die Produktion beendet oder gestartet wurde etc.) ermittelt werden, wie bereits vorab beschrieben wurde.

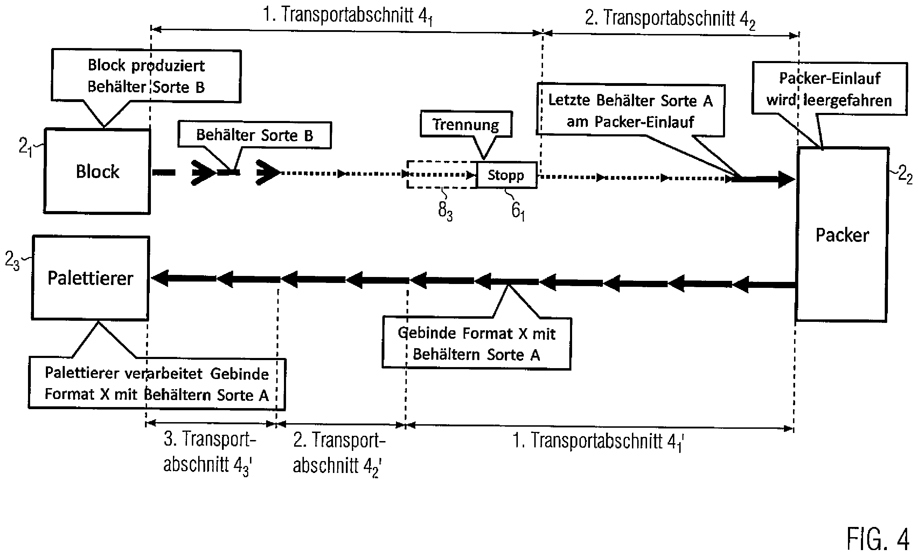

Wird nun festgestellt, dass der erste Transportabschnitt 4₁ leergelaufen ist, wird, wie in Fig. 4 dargestellt ist, von der Steuereinrichtung 10 die Trenneinrichtung 6₁ aktiviert. In diesem Ausführungsbeispiel wird beispielsweise der Transporteur 8₃, der in Fig. 4 gestrichelt dargestellt ist, gestoppt. Das bedeutet, dass die Behälterbehandlungsmaschine 2₁ nicht warten muss, bis der Packer 2₂ von Behältern der Sorte A leergelaufen ist, sondern bereits vorher die Produktion der Behälterbehandlungsmaschine 2₁ beginnen kann, entweder wenn bereits die Trenneinrichtung, wie in Fig. 4 gezeigt ist, aktiviert ist, jedoch auch bereits vorher. Es muss lediglich sichergestellt werden, dass sich die Behälter der Sorte B in Transportrichtung noch vor der Trenneinrichtung, d.h. in dem ersten Transportabschnitt 4₁ befinden, wenn die Trenneinrichtung 6₁ aktiviert wird. Die Trenneinrichtung bringt den Vorteil mit sich, dass bereits Behälter der Sorte B in die Transportstrecke zwischen der ersten und zweiten Behälterbehandlungsmaschine einlaufen können, während noch die letzten Behälter der Sorte A aus der Transportstrecke 4₂ auslaufen. Selbst wenn es zu Stauungen am Packer 2₂ oder an den Transporteuren nach der Trenneinrichtung 6₁ kommt, kann sicher verhindert werden, dass sich die Behälter der Sorte A und B durchmischen.

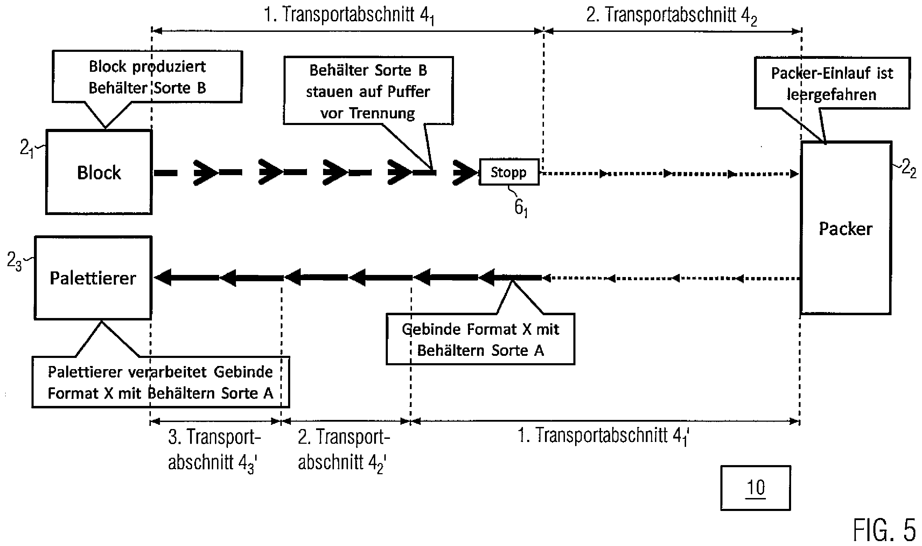

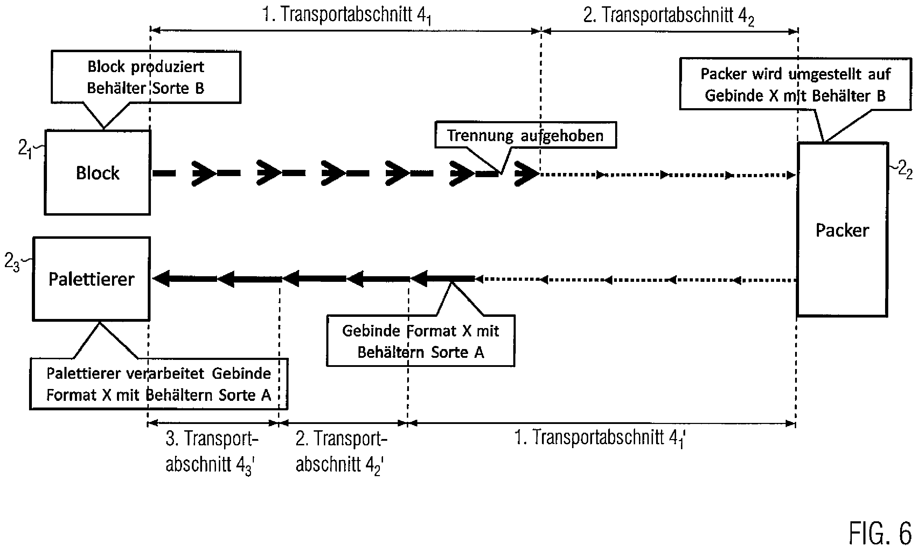

Fig. 5 zeigt einen Zustand, bei dem der zweite Transportabschnitt 4₂ bereits vollständig von Behältern der Sorte A leergelaufen ist. Wird von einer entsprechenden Einrichtung bestimmt, dass sich keine Behälter der Sorte A mehr im zweiten Transportabschnitt 4₂ befinden, d.h. hier dass der Packereinlauf leergelaufen ist, kann, wie aus Fig. 6 hervorgeht, die Trennung aufgehoben werden und Behälter der Sorte B können nun auch in den zweiten Transportabschnitt 4₂ in Richtung zweite Behälterbehandlungsmaschine, hier Packer 2₂, transportiert werden. Die Trennung kann aufgehoben werden, indem beispielsweise der Transporteur 8₃ wieder in Betrieb genommen wird. Im Bereich des Transporteurs 8₃ kann eine sogenannte Staustrecke ausgebildet sein, die so ausgelegt ist, dass sie die aufgestauten Behälter puffern kann. Nun ist es beispielsweise möglich, dass dieser Puffer durch eine erhöhte Geschwindigkeit der Transporteure, die nach der Trenneinrichtung angeordnet sind, leergezogen wird. Auch durch eine Überleistung des Packers kann der Puffer leergezogen werden.

Wie aus Fig. 6 hervorgeht, wird, nachdem der Packer leergelaufen ist, der Packer umgestellt auf die Produktion von Gebinden mit Behältern B. Bei diesem Ausführungsbeispiel wurde die Trennung bereits aufgehoben, bevor der Packer vollständig umgestellt wurde. Gemäß einer weiteren Ausführungsform kann jedoch auch die Trennung erst aufgehoben werden, wenn vom Packer ein Signal erzeugt wird, dass eine Umstellung stattgefunden hat. Die Trennung jedoch bereits vorher aufzuheben, bringt einen zeitlichen Vorteil mit sich, wobei dennoch sichergestellt ist, dass es zu keiner Vermischung der Produkte kommt.

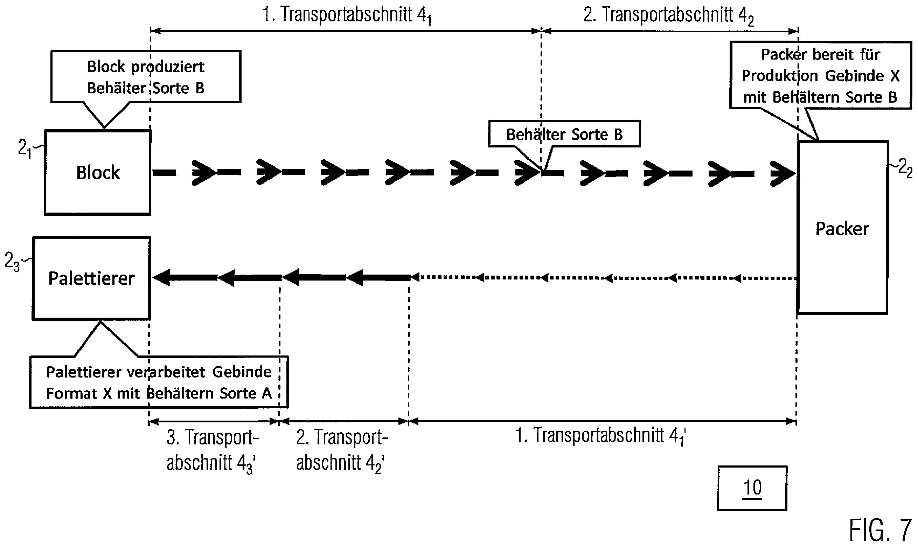

Wie aus Fig. 7 hervorgeht, werden nun in dem Produktstrom die Behälter der Sorte B vom Block 2₁ zum Packer 2₂ transportiert.

Hier ist der Packer bereit für Gebinde der Sorte B und produziert aber noch nicht.

Somit konnte in der Vorrichtung 1a auf einfache und sichere Art und Weise die Produktion von Behältern der Sorte A auf Behälter der Sorte B umgestellt werden.

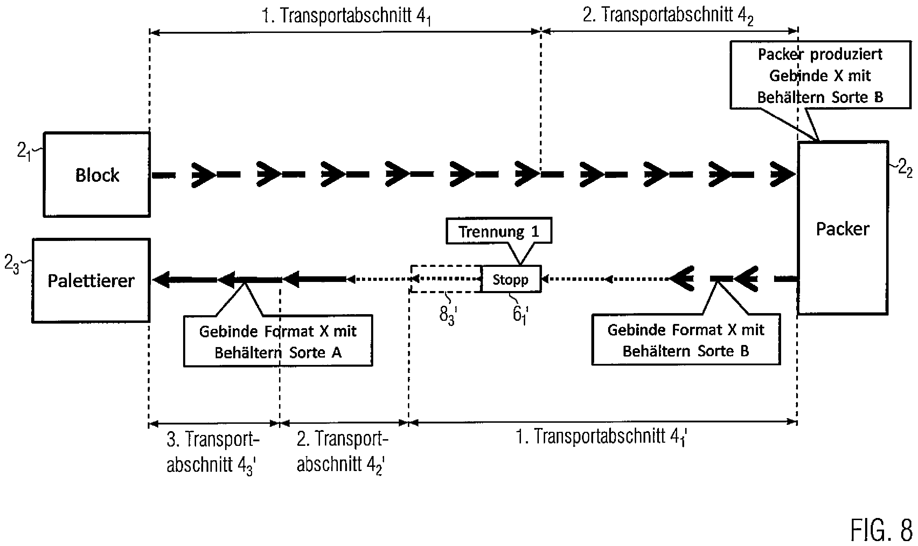

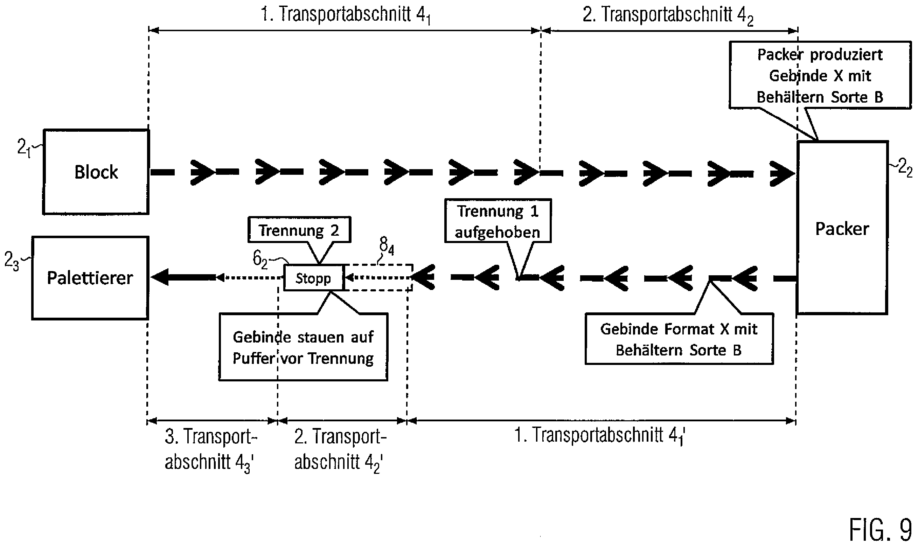

Betrachtet man nun die Vorrichtung 1b, bei der der Packer 2₂ die erste Behälterbehandlungsmaschine darstellt und der Palettierer 2₃ die zweite Behälterbehandlungsmaschine, so kann in Fig. 7 erkannt werden, dass sich noch die letzten Behälter der Sorte A, hier bereits als Gebinde, durch den zweiten Transportabschnitt 4'₂ und dritten Transportabschnitt 4'₃ zum Palettierer 2₃ hin bewegen. Der erste Transportabschnitt 4'₁ ist, wie aus Fig. 7 hervorgeht, bereits leergefahren. Entsprechendes kann, wie zuvor beschrieben, durch eine entsprechende Erkennungseinrichtung festgestellt werden. Da sich kein Behälter bzw. Gebinde der Sorte A mehr in diesem Bereich befindet, aktiviert die Steuereinrichtung 10 die erste Trenneinrichtung 6'₁, wobei in diesem Ausführungsbeispiel beispielsweise der Transporteur 8'₃ gestoppt wird. Somit können, wie aus Fig. 8 hervorgeht, bereits Gebinde bzw. Behälter der Sorte B in den ersten Transportabschnitt einlaufen, während Behälter bzw. Gebinde der Sorte A noch aus dem zweiten oder dritten Transportabschnitt 4'₂ , 4'₃ abtransportiert werden. Somit kann eine Vermischung der Sorten wirksam verhindert werden. Wenn nun der letzte Behälter bzw. das letzte Gebinde der Sorte A den zweiten Transportabschnitt 4'₂ verlässt, kann entsprechendes von einer Erfassungseinrichtung erfasst werden, wobei dann eine zweite Trenneinrichtung 6'₂ aktiviert werden kann, wie aus Figur 9 hervorgeht. Hier wird dann beispielsweise der Transporteur 8'₄ gestoppt. Gleichzeitig kann die erste Trennung 6'₁ aufgehoben werden, so dass sich Behälter der Sorte B weiter zum zweiten Transportabschnitt 4'₂ bewegen können.

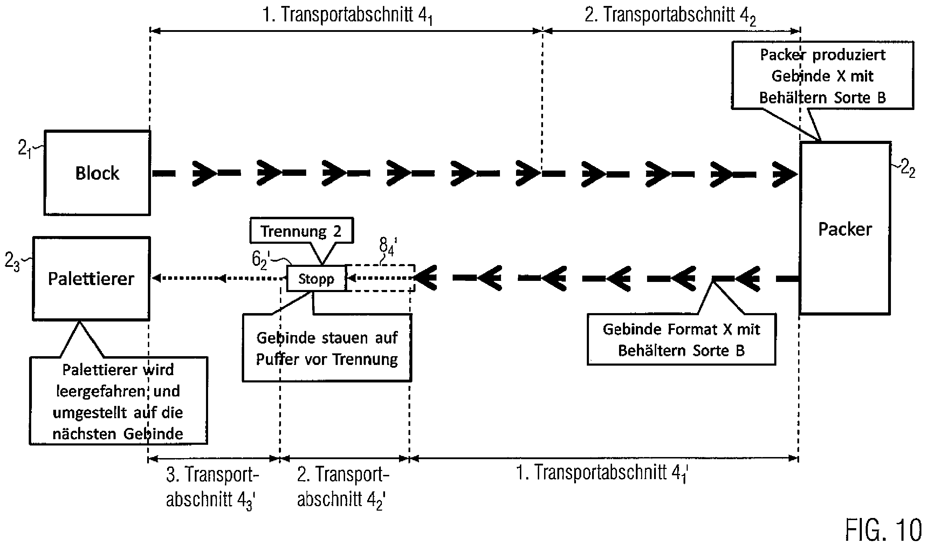

Der Vorteil von mehreren Trenneinrichtungen liegt darin, dass die Puffergröße bei den einzelnen Trenneinrichtungen kleiner gewählt werden kann, da sich die Puffer entlang der Transportstrecke aufteilen. Wie aus Fig. 9 und 10 hervorgeht, bewegen sich die letzten Behälter der Sorte A nun auch aus dem dritten Transportabschnitt 4'₃ hinaus. Wenn der Palettierer, wie aus Fig. 10 hervorgeht, leergefahren ist, kann er auf die Gebinde de Behälter der Sorte B umgestellt werden.

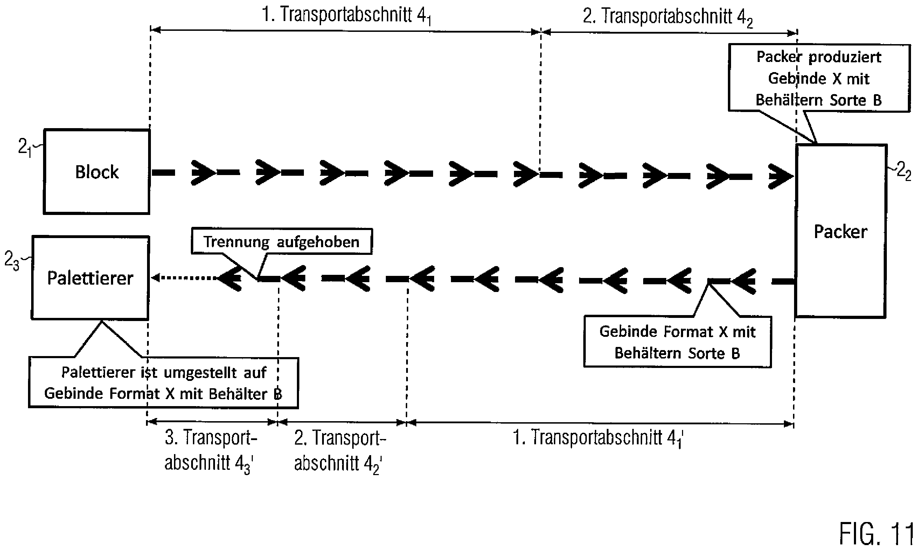

Fig. 11 zeigt, dass auch die zweite Trenneinrichtung 6'₂ von der Steuereinrichtung 10 deaktiviert wird. Dies kann erfolgen, wenn erkannt wird, dass sich in dem der Trenneinrichtung nachfolgenden Abschnitt 4'₃ keine Behälter der Sorte A befinden, d.h. der Palettierereinlauf bzw. -zulauf leergefahren ist. Der Palettierer kann auch eine eigene Stopp-Einrichtung aufweisen, die vom Palettierer selbst ein- und ausgeschaltet werden kann. Befindet sich die Trenneinrichtung relativ nah am Palettierer, so kann es auch sinnvoll sein, dass die Trennung erst dann aufgehoben wird, wenn der Palettierer ein Signal erzeugt, dass er betriebsbereit für Gebinde mit Behältern der Sorte B ist. Da die Trennung aufgehoben ist, können die Behälter der Sorte B nun auch den dritten Transportabschnitt zum Palettierer hin passieren, wobei nun die Produktion der Behälter der Sorte B kontinuierlich läuft und die Umstellung abgeschlossen ist.

Wie zuvor beschrieben, wird eine Trennung immer dann aufgehoben, wenn festgestellt wird, dass sich in einem bestimmten nachfolgenden Transportabschnitt keine Behälter der vorhergehenden Sorte A mehr befinden. Wird jedoch eine Störung an einer der Trenneinrichtung nachfolgend angeordneten Behälterbehandlungsmaschine oder eines nachfolgend angeordneten Transporteurs erfasst, so dass ein Rückstau zu erwarten oder bereits ein Rückstau erfolgt ist, wird ein Störsignal an die Steuereinrichtung 10 geleitet und die Trenneinrichtung wird nicht deaktiviert.

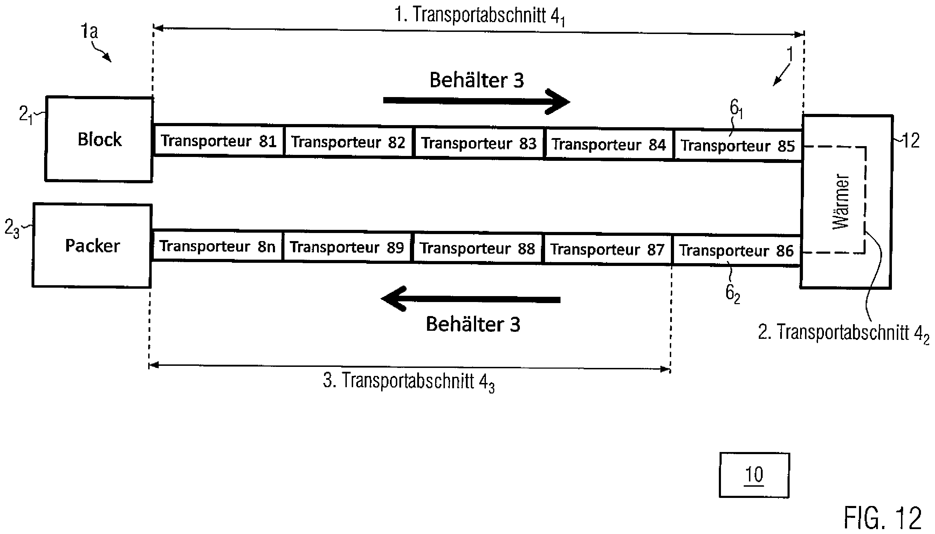

Die Fig. 12-20 zeigen die Vorrichtung 1a der Fig. 1-11, d.h. bei der der Block 2₁ die erste Behälterbehandlungsmaschine darstellt und der Packer 2₂ die zweite Behälterbehandlungsmaschine. Die Vorrichtung entspricht dabei im Wesentlichen der in Fig. 1 beschriebenen Vorrichtung, wobei jedoch zusätzlich zwischen Block 2₁ und Packer 2₂ eine Wärmeeinrichtung 12 vorgesehen ist. Die Wärmeeinrichtung kann beispielsweise ein Pasteur oder eine Einrichtung zum Aufwärmen der Produkte, beispielsweise zum Verhindern von Kondenswasser sein. Die Wärmeeinrichtung 12 kann jedoch auch eine Kühleinrichtung sein zum Kühlen heiß abgefüllter Produkte. Auf jeden Fall ist die Transportgeschwindigkeit durch die Wärmeeinrichtung 12 geringer als die Transportgeschwindigkeit mit den Transporteuren 8₁-8₅. Ein erster Transportabschnitt 4₁ erstreckt sich von dem Block 2₁ bis zur Wärmeeinrichtung, ein zweiter Transportabschnitt erstreckt sich durch die Wärmeeinrichtung 12 hindurch, beispielsweise bis ans Ende des ersten Transporteurs nach der Wärmeeinrichtung 12. Ein dritter Transportabschnitt 4₃ erstreckt sich in einem Bereich nach der Wärmeeinrichtung 12 und vor dem Packer 2₂. Bei diesem Ausführungsbeispiel umfasst die erste Trenneinrichtung 6₁ den Transporteur 8₅ und die zweite Trenneinrichtung 6₂ den Transporteur 8₆. Die jeweiligen Transporteure, die den Trenneinrichtungen zugeordnet sind, befinden sich also, wie bereits erläutert, am Ende des jeweiligen Transportabschnitts, da sie leergefahren sein müssen, bevor sie gestoppt werden.

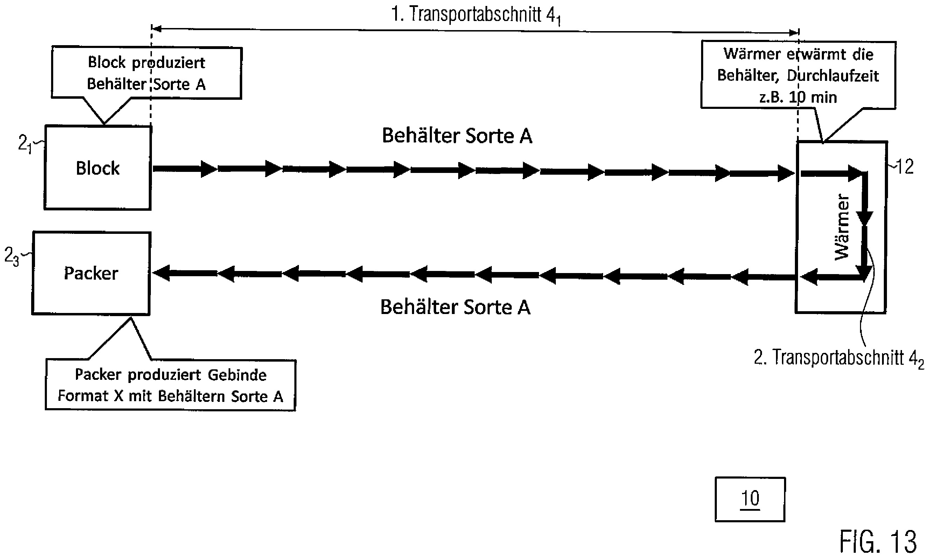

Fig. 13 zeigt nun einen Verfahrensschritt, bei dem der Block Behälter der Sorte A produziert, die beispielsweise im Wärmer 12 erwärmt werden. Nach dem Erwärmen werden die Behälter der Sorte A dann zum Packer 2₂ gefördert, der Gebinde mit Behältern der Sorte A produziert.

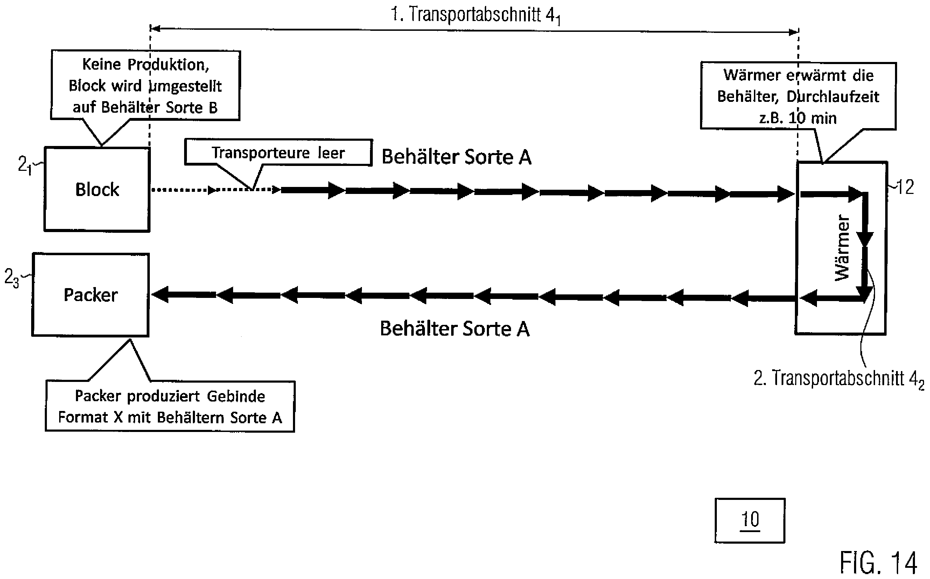

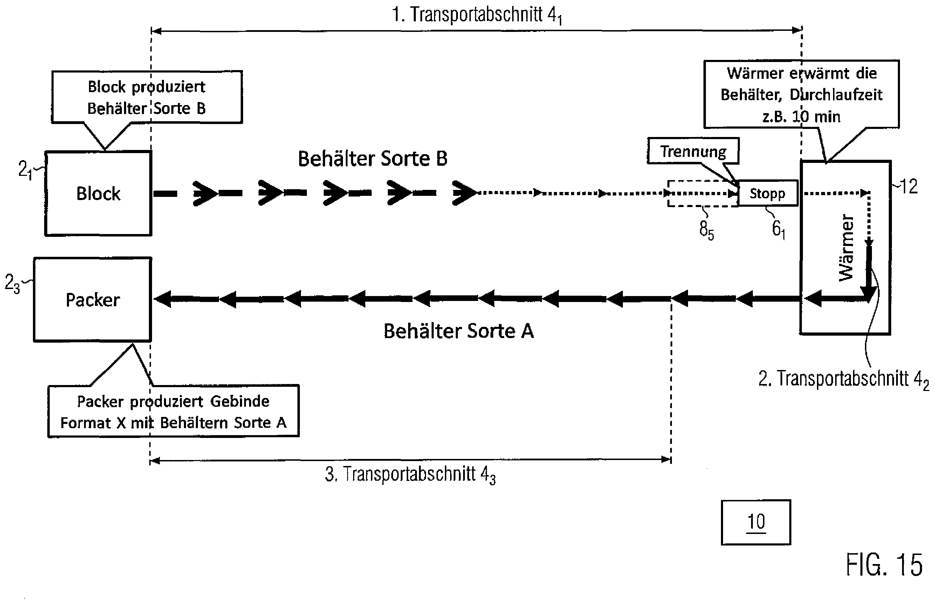

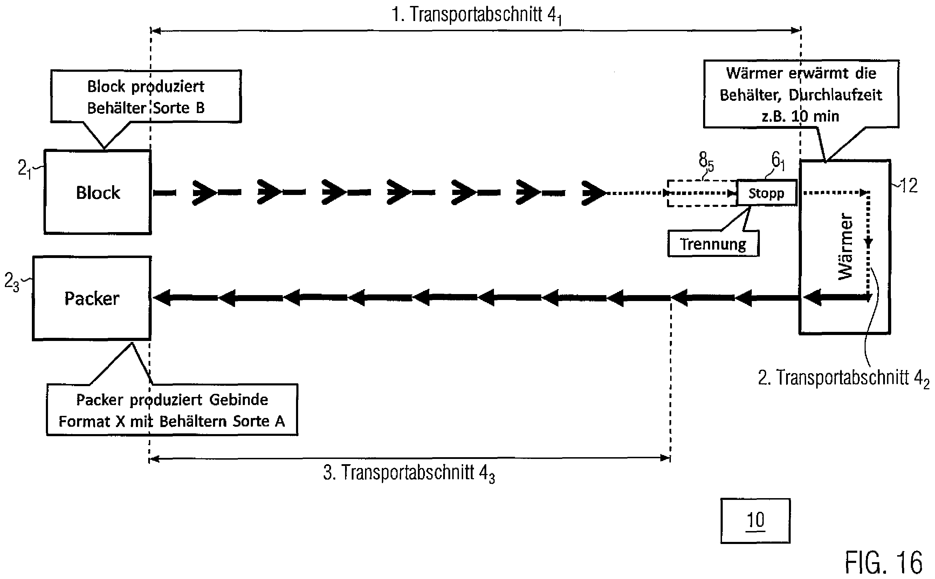

Beim Umstellen auf Behälter der Sorte B endet die Produktion der Behälter der Sorte A. Der Block wird, wie aus Fig. 14 hervorgeht, auf Behälter der Sorte B umgestellt, so dass die entsprechenden Transporteure in dem ersten Transportabschnitt 4₁ leerlaufen. Nachdem der Block bzw. die erste Behälterbehandlungsmaschine 2₁ auf Behälter der Sorte B umgestellt wurde, kann der Block unmittelbar beginnen, die Behälter der Sorte B zu produzieren. Läuft nun der letzte Transporteur 8₅ leer, d.h. befinden sich keine Behälter der Sorte A mehr auf dem ersten Transportabschnitt 4₁, so wird, wie in Fig. 15 dargestellt wird, das Trennelement 6₁ aktiviert, indem beispielsweise der Transporteur 8₅ stoppt. Somit ist der Transportabschnitt 4₁ vom Transportabschnitt 4₂ getrennt und es kann nicht zu einer Vermischung der Behälter der unterschiedlichen Sorten kommen. Weiter läuft der Transportabschnitt 4₂ in der Wärmeeinrichtung 12 langsam leer und die Behälter der Sorte A bewegen sich in Richtung Packer 2₂, siehe hierzu auch Fig. 16.

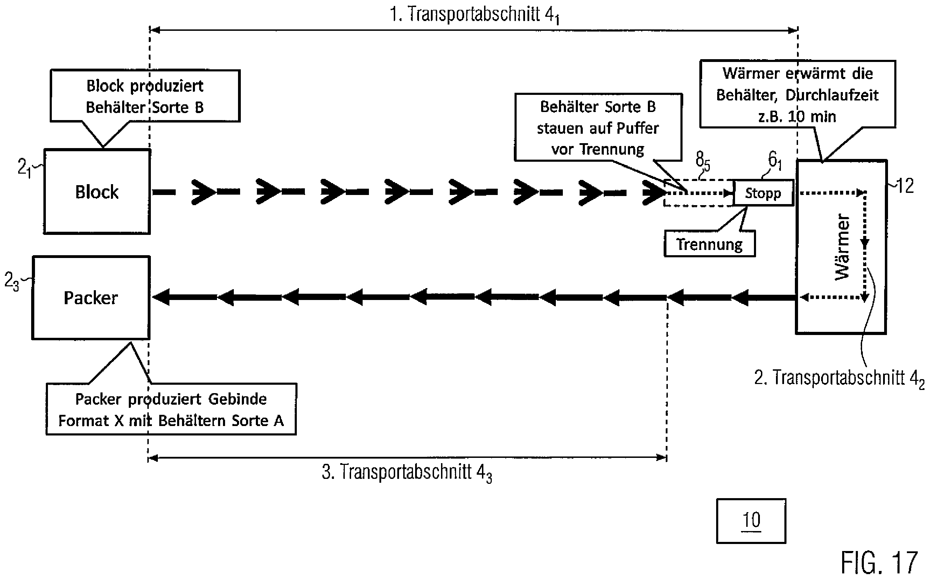

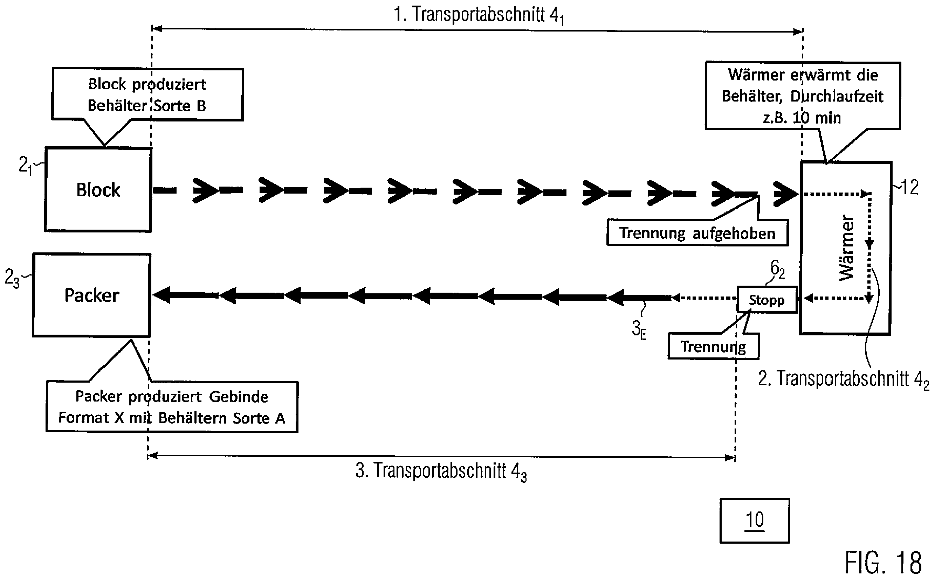

Wie in Fig. 17 angedeutet ist, stauen sich hierbei die Behälter der Sorte B vor der aktivierten Trenneinrichtung 6₁ auf. Wird nun, wie aus Fig. 18 hervorgeht, festgestellt, dass der zweite Transportabschnitt 4₂ leergefahren ist, d.h. dass sich keine Behälter mehr auf dem letzten Transporteur 8₆, direkt im Anschluss an die Wärmebehandlung befinden, kann die erste Trenneinrichtung 6₁ deaktiviert werden. Wenn der zweite Transportabschnitt 4₂ von Behältern der Sorte A leergefahren ist, wie aus Fig. 18 erkannt werden kann, kann der Transporteur 8₆ gestoppt werden, d.h. die Trenneinrichtung 6₂ aktiviert werden. Da sich die Behälter der Sorte B, die jetzt in die Wärmeeinrichtung 12 einlaufen, ohnehin eine längere Zeit in der Wärmeeinrichtung 12 aufhalten, ist kein gesonderter oder nur ein kleiner Pufferbereich notwendig.

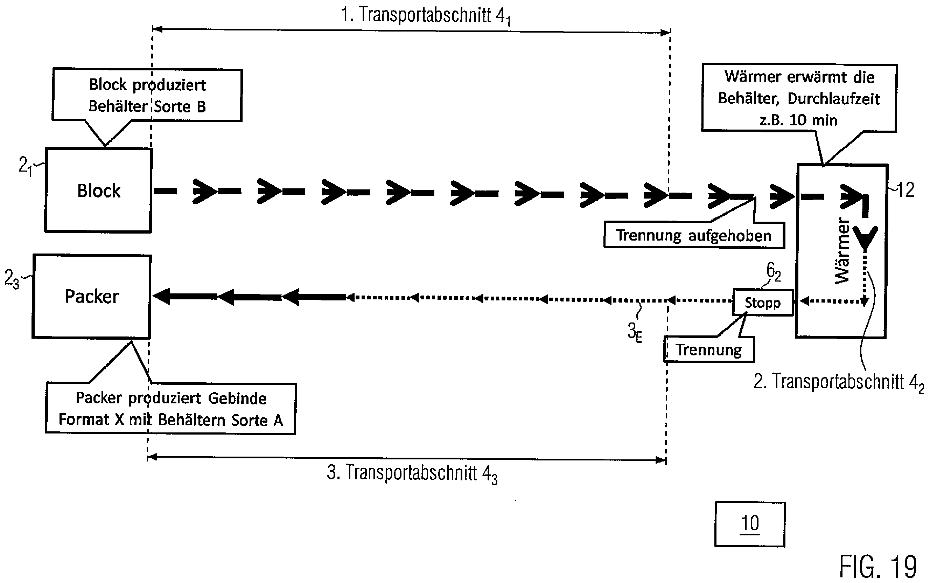

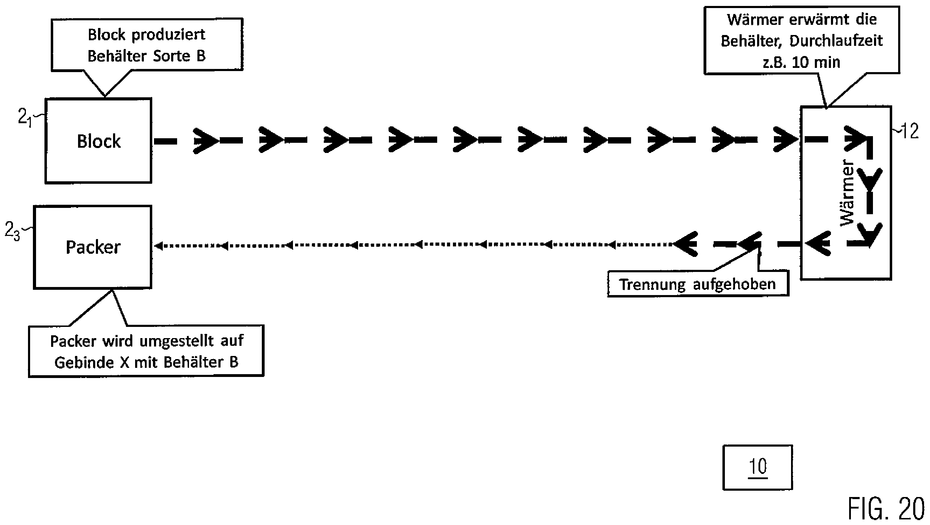

Die Behälter der Sorte A laufen nun in Richtung Packer aus, wobei sich der letzte Behälter 3_{E} durch den dritten Transportabschnitt 4₃ bewegt. Wie aus Fig. 19 hervorgeht, läuft nun der dritte Transportabschnitt 4₃ leer und der Packer produziert immer noch Gebinde mit der Sorte A. Wird festgestellt, dass sich in dem dritten Transportabschnitt 4₃ keine Behälter der Sorte B befinden, wird die zweite Trenneinrichtung 6₂ deaktiviert, d.h. der Transporteur 8₆ läuft wieder an. Somit können Behälter der Sorte B jetzt auch in den dritten Transportabschnitt 4₃ einlaufen. Jetzt wird der leergelaufene Packer 2₂ Figur 20 auf Behälter der Sorte B umgestellt und die Behälter der Sorte B können im Packer 2₂ behandelt werden. Damit ist der Wechsel bzw. die Umstellung der Produktion von der Sorte A auf die Sorte B umgestellt.

Vorteilhafterweise wird bei allen Ausführungsbeispielen die letzte Trenneinrichtung erst dann deaktiviert, wenn die nachfolgende Behälterbehandlungsmaschine vollständig von der vorhergehenden Behältersorte leergelaufen ist und/oder alle vorhergehenden Behälter an die nachfolgende Behälterbehandlungsmaschine übergeben wurden. Dazu kann eine entsprechende Behälterbehandlungsmaschine ein entsprechendes Signal erzeugen.

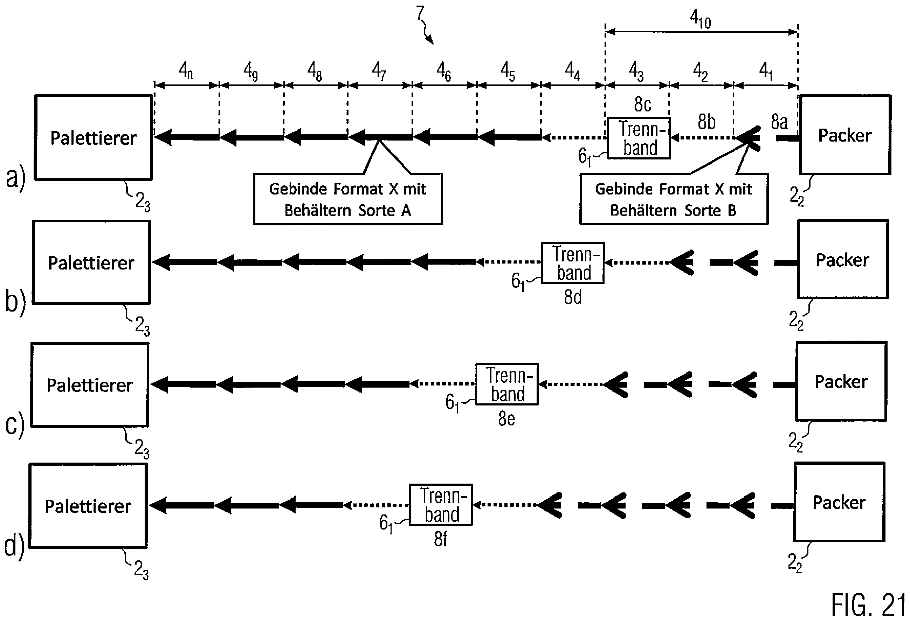

Das im Zusammenhang mit Fig. 21a-d dargestellte Ausführungsbeispiel ist ebenfalls besonders vorteilhaft für nicht staufähige Transportstrecken mit mehreren Transporteuren. Hier ist eine Vorrichtung gezeigt, die beispielsweise einen Packer als erste Behälterbehandlungsmaschine aufweist und einen Palettierer als zweite Behälterbehandlungsmaschine 2₃. Bei diesem Ausführungsbeispiel umfasst die Transporteinrichtung 7 wieder mehrere Transporteure 8a-8n, die hintereinander angeordnet sind. Die Transportabschnitte 4ₙ entsprechen jeweils der Transportstrecke eines Transporteurs 8ₙ, wie aus Fig. 21a hervorgeht. Das bedeutet, wenn zum Beispiel der erste Transporteur 8a leergelaufen ist, d.h. bestimmt wird, dass die erste Transportstrecke 4₁ leergelaufen ist, der entsprechende Transporteur 8ₐ stillgesetzt werden kann. Da jedoch der Packer auch eine gewisse Zeit benötigt, um umgerüstet zu werden, kann sich der erste Transportabschnitt auch über mehrere Transporteure erstrecken, hier beispielsweise über drei, wie durch den Abschnitt 4₁₀ dargestellt wurde, wobei dann der letzte Transporteur 8_{c} als Trenneinrichtung 6₁ fungiert, wenn der Abschnitt 4₁₀ leergelaufen ist. Wird festgestellt, dass der der Trenneinrichtung 6₁ nachgeschaltete Abschnitt 4₄ ebenfalls leergelaufen ist, wie aus Fig. 21a hervorgeht, wird der dazugehörige Transporteur 8d gestoppt (Figur 21b) und dient somit zur Trennung.

Das heißt also, dass wenn die Transporteure von Behältern der Sorte A jeweils leergefahren sind, der jeweils leergefahrene Transporteur, der sich in Transportrichtung an vorderster Stelle hinter dem letzten Behälter der Sorte A befindet, gestoppt wird, bis der in Transportrichtung folgende Transporteur von Behältern der Sorte A leergefahren ist, der dann wiederum gestoppt wird, wobei der vorherige Transporteur wieder in Betrieb genommen wird. Die aktiven Trenneinrichtungen folgen also der Bewegung der Gebinde der ersten Sorte in Richtung Palettierer (siehe auch Figuren 21c, 21d).

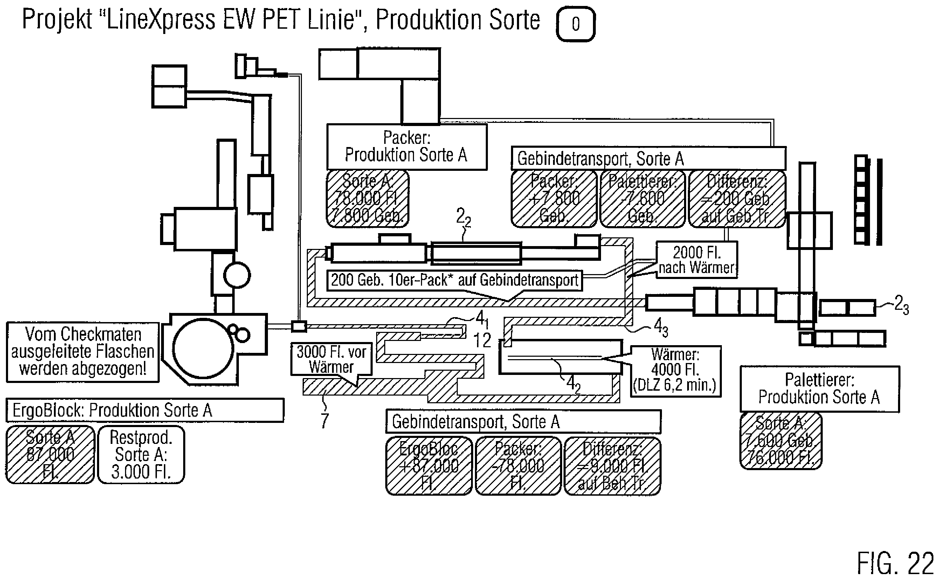

Fig. 22 zeigt die vorliegende Erfindung in Zusammenhang mit einer PET-Linie. Dabei entspricht das Ausführungsbeispiel im Wesentlichen dem in Fig. 1 gezeigten Ausführungsbeispiel. Wie aus Fig. 22 zu erkennen ist, kann aufgrund der Zählung beispielsweise der Behälter in dem Block, d.h. hier der ersten Behälterbehandlungsmaschine 2₁ und durch Zählung der einzelnen Behälter im Packer der Sorte A die Anzahl der sich auf dem Behältertransport 7 befindenden Behälter der Sorte A bestimmt werden. Durch Bildung der Differenz zwischen der Gebinde am Packer und Gebinde am Palettierer kann die Anzahl der Behälter bzw. Gebinde auf der Transportstrecke zwischen Packern Palettierer bestimmt werden. In der Fig. 22 werden ausschließlich Behälter der Sorte A produziert.

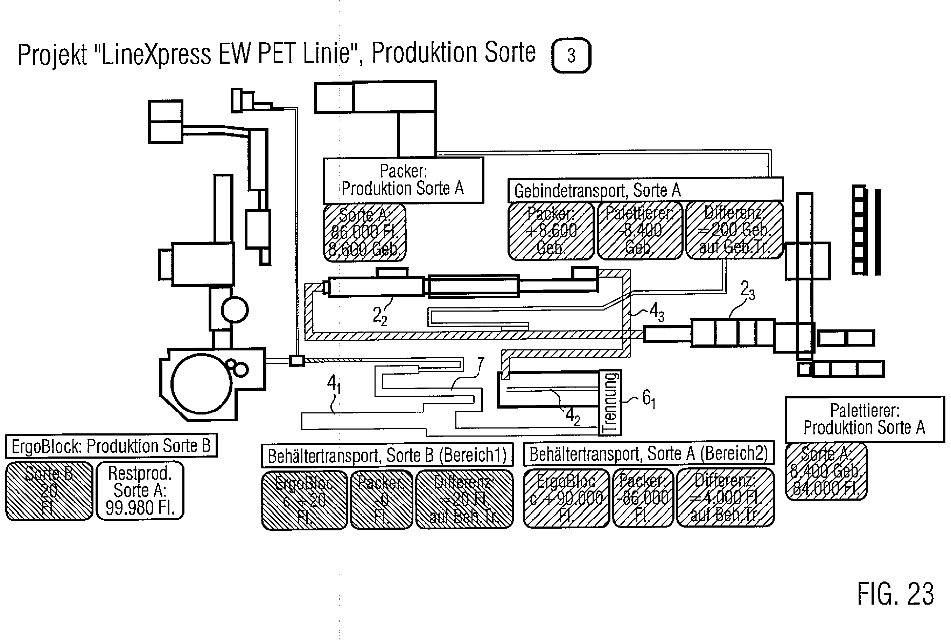

Fig. 23 zeigt bereits, dass der Block 2₁ auf die Produktion der Behälter der Sorte B umgestellt worden ist und die Transporteinrichtung 7 hier bereits von Behältern der Sorte A leergefahren ist und bereits die ersten Behälter der Sorte B von der Transporteinrichtung 7 in Richtung Wärmeeinrichtung 12 transportiert werden. Die Trennung 6₁ vor der Wärmeeinrichtung ist hier aktiviert. Durch Zählen der Behälter und Differenzbildung kann beispielsweise ermittelt werden, wie viele Behälter einer entsprechenden Sorte sich auf der jeweiligen Transporteinrichtung befinden. Durch Verfolgen des beispielsweise zuletzt produzierten Behälters der Sorte A kann wie zuvor beschrieben auch ermittelt werden in welchem Transportabschnitt sich die Behälter der Sorte A befinden.

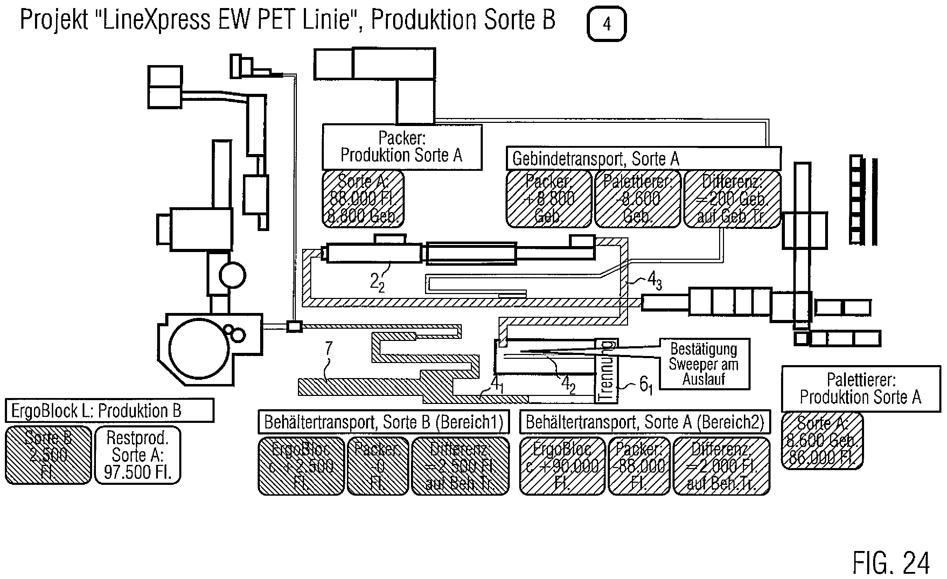

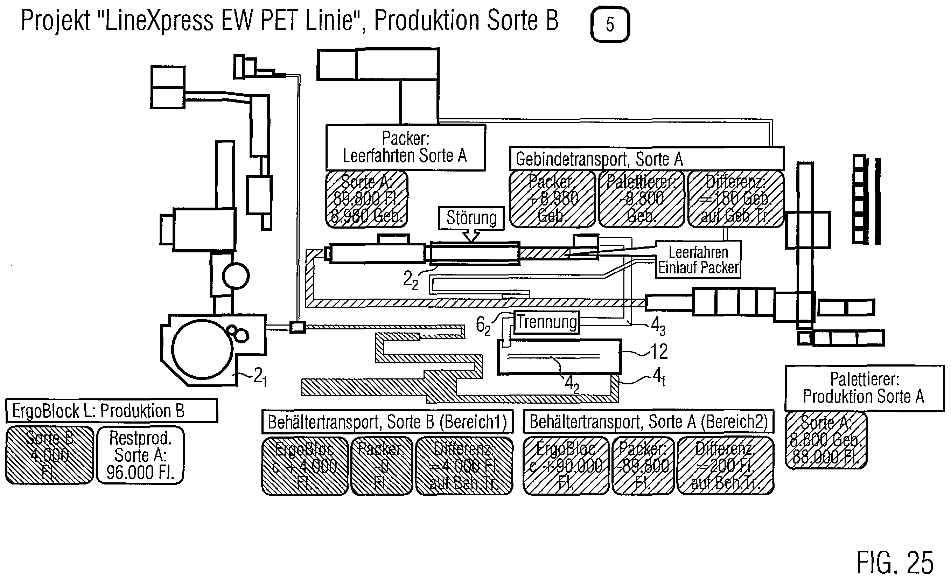

Fig. 24 zeigt nun, dass bereits mehrere, hier zum Beispiel 2.500 Behälter der Sorte B sich in einem Bereich zwischen dem Block 2₁ und dem Packer 2₂ befinden. Da bereits die Trennung 6₁ aktiv ist, befinden sich diese Behälter im ersten Transportabschnitt 4₁. Es befinden sich immer noch 2.000 Behälter nach dem Wärmer 12. Wie zuvor beschrieben und aus Fig. 25 hervorgeht, befindet sich nun kein Behälter der Sorte A mehr im Transportabschnitt 4₂, weswegen die zweite Trennung 6₂ aktiviert wurde. Im Transportabschnitt 4₃, hier im Packereinlauf befinden sich nur noch 200 Behälter. Selbst wenn eine Störung im Packer 2₂ vorliegt, und sich Behälter der Sorte A vor dem Packer aufstauen kommt es aufgrund der aktivierten Trenneinrichtungen hinter dem wärmer 12 zu keiner Vermischung der Behältnisse der Sorte A und B.

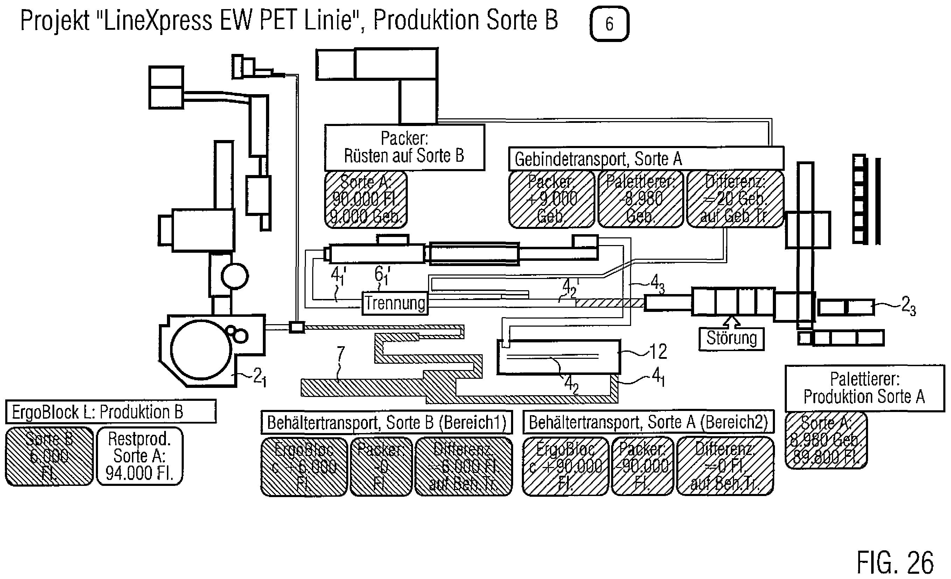

Fig. 26 zeigt nun den Zustand, in dem nur noch 20 Gebinde auf dem Gebindetransport vor dem Palettierer transportiert werden. Eine Trennung 6'₁ ist hier aktiviert, um ein Vermischen der unterschiedlichen Sorten zu verhindern, selbst wenn eine Störung im Palettierer vorliegt. Wie zuvor beschrieben kann diese Trennung deaktiviert werden, wenn die Transport Strecke nach dieser Trenneinrichtung leergelaufen ist.

## Patentansprüche

1. Verfahren zum Behandeln von Behältern (3) mit mindestens zwei Behälterbehandlungsmaschinen (2₁,2₂, 2₃), zwischen denen eine Transporteinrichtung (7) zum Transport der Behälter angeordnet ist,
wobei
beim Wechsel von Behältern einer ersten Sorte (A) auf Behälter einer zweiten Sorte (B):
- eine Trenneinrichtung (6₁, 6₂) zwischen der ersten und zweiten Behälterbehandlungsmaschine (2₁,2₂, 2₃) aktiviert wird, die den Behälterstrom in einen ersten und zweiten Transportabschnitt trennt (4₁, 4₂), nachdem der erste Transportabschnitt (4₁) von Behältern (3) der ersten Sorte (A) leergefahren ist, wobei der erste Transportabschnitt an den zweiten Transportabschnitt angrenzt;
- Behälter (3) der zweiten Sorte (B) schon in den ersten Transportabschnitt (4₁) gefördert und vor der Trenneinrichtung gestaut werden, während Behälter der ersten Sorte (A) aus dem zweiten Transportabschnitt (4₂) zur zweiten Behälterbehandlungsmaschine (2) gefördert werden;
und nachfolgend
- die Trenneinrichtung (6₁) zwischen dem ersten und zweiten Transportabschnitt (4₁, 4₂) derart deaktiviert wird, dass die aufgestauten und nachfolgenden Behälter (3) der zweiten Sorte (B) durch den zweiten Transportabschnitt (4₂) zur zweiten Behälterbehandlungsmaschine (2₂) transportiert werden, wobei die Transporteinrichtung mehrere einzeln ansteuerbare Transporteure (8a, b, c) aufweist und die Trenneinrichtung (6₁, 6₂) einen Transporteur umfasst, der bei Aktivierung der Trenneinrichtung (6₁, 6₂) derart stoppt, dass
sich die Behälter (3) aufstauen, wobei es mindestens eine Trenneinrichtung (6₁, 6₂) gibt, die einen der Transporteure umfasst,
**dadurch gekennzeichnet,**
**dass** der als Trenneinrichtung fungierende Transporteur (8) im Endbereich des jeweiligen Transportabschnitts angeordnet ist oder die Transportstrecke des Transporteurs dem Transportabschnitt entspricht,
**dass**
jeweils ein bestimmter Transporteur (8) einer jeweiligen Trenneinrichtung (6₁, 6₂, 6ₙ₊₁) zugeordnet ist, so dass die mindestens zwei Transportabschnitte (4₁, 4₂) jeweils eine vorbestimmte Länge und Lage aufweisen und mehrere Transportabschnitte (4ₙ) vorgesehen sind, die jeweils der Transportstrecke aufeinanderfolgender Transporteure (8) entsprechen
und **dass**
dann, wenn die Transporteure (8) von Behältern (3) der ersten Sorte A jeweils leergefahren sind, der jeweils leergefahrene Transporteur, der sich in Transportrichtung an vorderster Stelle hinter den Behältern der ersten Sorte A befindet gestoppt wird, bis der in Transportrichtung folgende Transporteur von Behältern der ersten Sorte A leergefahren ist, der dann wiederum gestoppt wird, wobei der vorherige Transporteur wieder in Betrieb genommen wird.

2. Verfahren nach Anspruch 1, **dadurch gekennzeichnet, dass** nachdem der zweite Transportabschnitt (4₂) von Behältern (3) der ersten Sorte (A) leergefahren ist, die Trenneinrichtung (6₁) zwischen dem ersten und zweiten Transportabschnitt (4₁ 4₂) deaktiviert wird.

3. Verfahren nach Anspruch 1, **dadurch gekennzeichnet, dass** zwischen der ersten und zweiten Behälterbehandlungsmaschine (2₁, 2₂) mehrere Trenneinrichtungen (6₁, 6₂) vorgesehen sind, wobei insbesondere nach dem n+1ten Transportabschnitt (4ₙ₊₁) eine weitere n+2te Transportstrecke (4ₙ₊₂) vorgesehen ist, wobei eine n+1te Trenneinrichtung (6ₙ₊₁) zwischen dem n+1ten und dem n+2ten Transportabschnitt aktiviert wird, nachdem der n+1te Transportabschnitt (4ₙ₊₁) von den Behältern (3) der ersten Sorte (A) leergefahren ist und
- Behälter (3) der zweiten Sorte (B) in den n+1ten Transportabschnitt (4ₙ₊₂) gefördert werden, während Behälter (3) der ersten Sorte (A) aus der n+2ten Transportstrecke (4ₙ₊₂) hinaus transportiert werden und vorzugsweise
- die n+1te Trenneinrichtung deaktiviert wird, wenn der n+2te Transportabschnitt (4ₙ₊₂) von Behältern der ersten Sorte (A) leergefahren ist, wobei n ∈ N ist.

4. Verfahren nach mindestens einem der Ansprüche 1 oder 2, **dadurch gekennzeichnet, dass** während die Trenneinrichtung (6₁, 6₂, 6ₙ₊₁) aktiviert ist, sich Behälter (3) der zweiten Sorte (B) vor der Trenneinrichtung (6₁, 6₂, 6ₙ₊₁) aufstauen, und die aufgestauten Behälter der zweiten Sorte (B) bei Deaktivierung der Trenneinrichtung den gesamten zweiten Transportabschnitt durchlaufen.

5. Verfahren nach mindestens einem der Ansprüche 1-4, **dadurch gekennzeichnet, dass** die Trenneinrichtung (6₁,6₂) ein mechanisches Aufstauelement umfasst, das in den Behälterstrom eingebracht wird.

6. Verfahren nach mindestens einem der Ansprüche 1-5, **dadurch gekennzeichnet, dass** die gleiche Transporteinrichtung (7) ohne Umstellung zwischen den Behälterbehandlungsmaschinen (2₁, 2₂) für die erste Sorte (A) und zweite Sorte (B) verwendet wird.

7. Verfahren nach mindestens einem der Ansprüche 1-6, **dadurch gekennzeichnet, dass** über mindestens einen Sensor (9) an dem ersten und/oder n+1ten Transportabschnitt ermittelt wird, ob sich Behälter der ersten Sorte (A) im ersten und/oder im zweiten Transportabschnitt (4₁, 4₂) befinden.

8. Verfahren nach mindestens einem der vorhergehenden Ansprüche, **dadurch gekennzeichnet, dass** die erste Behälterbehandlungsmaschine (2₁) ein Signal für das Ende der Produktion von Behältern der ersten Sorte (A) an eine Steuereinrichtung (10) leitet, und in Abhängigkeit des Signals ermittelt, ob sich Behälter auf dem ersten und/oder n+1ten Transportabschnitt befinden, wobei insbesondere der letzte Behälter der ersten Sorte (A) verfolgt wird.

9. Verfahren nach mindestens einem der Ansprüche 1-8, **dadurch gekennzeichnet, dass** wenn eine Steuereinrichtung (10) ein Störsignal einer der Trenneinrichtung nachfolgend angeordneten Behälterbehandlungsmaschine oder eines nachfolgend angeordneten Transporteurs empfängt, eine aktivierte Trenneinrichtung nicht deaktiviert wird.

10. Vorrichtung zum Behandeln von Behältern (3)
mit mindestens
- einer ersten und zweiten Behälterbehandlungsmaschine (2₁, 2₂),
- einer Transporteinrichtung (7) zwischen der ersten und zweiten Behälterbehandlungsmaschine (2₁, 2₂), wobei
die Transporteinrichtung (7) mehrere einzeln ansteuerbare Transporteure (8a, b, c) aufweist,
- einer Trenneinrichtung (6₁, 6₂) zwischen der ersten und zweiten Behälterbehandlungsmaschine (2₁, 2₂), die bei Aktivierung den Behälterstrom zwischen der ersten und zweiten Behälterbehandlungsmaschine in einen ersten und zweiten Transportabschnitt (4₁, 4₂) derart trennen kann,
dass sich die Behälter der ersten Sorte (A) vor der Trenneinrichtung aufstauen können, wobei der erste Transportabschnitt in Transportrichtung an den zweiten Transportabschnitt angrenzt,
und wobei die Trenneinrichtung (6₁, 6₂) einen Transporter umfasst, und
- einer Steuereinrichtung (10), die ausgebildet ist,
dass sie beim Wechseln von Behältern der ersten Sorte (A) auf Behälter (3) der zweiten Sorte (B),
die Trenneinrichtung (6₁, 6₂) zwischen einem ersten und zweiten Transportabschnitt (4₁, 4₂) aktivieren kann, wenn sich keine Behälter der ersten Sorte (A) mehr auf dem ersten Transportabschnitt (4₁) befinden, derart, dass
dem ersten Transportabschnitt schon Behälter (3) der zweiten Sorte (B) zugeführt werden können, während gleichzeitig ohne Vermischen der Behälter der ersten Sorte (A) und zweiten Sorte (B), Behälter der ersten Sorte (A) aus dem zweiten Transportabschnitt (4₂) hinaus gefördert werden können und
die Steuereinrichtung die Trenneinrichtung (6₁, 6₂) deaktivieren kann, derart, dass die aufgestauten und nachfolgenden Behälter der zweiten Sorte (B) durch den zweiten Transportabschnitt (4₂) in Richtung auf die zweite Behälterbehandlungsmaschine (2₂) transportiert werden können, wobei der Transporteur bei Aktivierung der Trenneinrichtung (6₁, 6₂) stoppt, derart, dass sich die Behälter (3) aufstauen, **dadurch gekennzeichnet, dass**
die Vorrichtung derart ausgebildet ist, dass
der als Trenneinrichtung fungierende Transporteur (8) im Endbereich des jeweiligen Transportabschnitts angeordnet ist oder die Transportstrecke des Transporteurs dem Transportabschnitt entspricht,
dass jeweils ein bestimmter Transporteur (8) einer jeweiligen Trenneinrichtung (6₁, 6₂, 6ₙ₊₁) zugeordnet ist, so dass die mindestens zwei Transportabschnitte (4₁, 4₂) jeweils eine vorbestimmte Länge und Lage aufweisen und mehrere Transportabschnitte (4ₙ) vorgesehen sind, die jeweils der Transportstrecke aufeinanderfolgender Transporteure (8) entsprechen
und dass dann, wenn die Transporteure (8) von Behältern (3) der ersten Sorte A jeweils leergefahren sind, der jeweils leergefahrene Transporteur, der sich in Transportrichtung an vorderster Stelle hinter den Behältern der ersten Sorte A befindet gestoppt wird, bis der in Transportrichtung folgende Transporteur von Behältern der ersten Sorte A leergefahren ist, der dann wiederum gestoppt wird, wobei der vorherige Transporteur wieder in Betrieb genommen wird.

11. Vorrichtung nach Anspruch 10, **dadurch gekennzeichnet, dass** die Vorrichtung mehrere Trenneinrichtungen (6₁,6₂) zwischen der ersten und zweiten Behälterbehandlungsmaschine aufweist.

12. Vorrichtung nach Anspruch 10 oder 11, **dadurch gekennzeichnet, dass** die Vorrichtung weiter eine erste Erfassungseinrichtung aufweist, die erfassen kann, ob beim Produktwechsel der erste Transportabschnitt (4₁) leergefahren ist und bei leergefahrenem ersten Transportabschnitt (4₁) ein Signal erzeugt, auf dessen Grundlage die Steuereinrichtung (10) die Trenneinrichtung (6₁, 6₂) aktiviert.

13. Vorrichtung nach mindestens einem der Ansprüche 10-12, **dadurch gekennzeichnet, dass** die Vorrichtung eine zweite Erfassungseinrichtung aufweist, die erfassen kann, ob der zweite Transportabschnitt (4₂) leergefahren ist und entweder ein Signal erzeugt, auf dessen Grundlage die Steuereinrichtung die Trenneinrichtung (6₁, 6₂) deaktiviert, wenn der zweite Transportabschnitt leergefahren ist, oder
ein entsprechendes Signal auf dessen Grundlage die Steuereinrichtung die Trenneinrichtung (G₁, G₂) deaktiviert, erzeugt, wenn der zweite Transportabschnitt leergefahren ist und die zweite Behälterbehandlungsmaschine ein Signal erzeugt, dass sie bereit ist zum Behandeln des Behälters der zweiten Sorte (B).

14. Vorrichtung nach mindestens einem der Ansprüche 10-13, **dadurch gekennzeichnet, dass** zwischen der ersten und zweiten Behälterbehandlungsmaschine (2₁, 2₂) eine Wärme- oder Kühleinrichtung (12) angeordnet ist und vorzugsweise eine Trenneinrichtung (6₁) vor der Wärme- oder Kühleinrichtung (12) und/oder nach der Wärme- oder Kühleinrichtung (12) angeordnet ist.

15. Vorrichtung nach mindestens einem der Ansprüche 10 -14, **dadurch gekennzeichnet, dass** die erste Behälterbehandlungsmaschine mindestens eine Maschine der folgenden Gruppe ist: Streckblasmaschine, Füller, Etikettiermaschine, Packer, Palettierer, Anschieber, und
die zweite Behälterbehandlungsmaschine mindestens eine Maschine der folgenden Gruppen: Streckblasmaschine, Füller, Etikettiermaschine, Packer, Palletierer, Anschieber,
vorzugsweise die erste Maschine ein Block ist, der eine Blasmaschine und eine Etikettiermaschine und einen Füller und einen Verschließer umfasst und die zweite Behälterbehandlungsmaschine ein Packer oder ein Palletierer ist oder
die erste Behälterbehandlungsmaschine ein Packer ist und die zweite Behälterbehandlungsmaschine ein Palettierer ist.

## Claims

1. Method for treating containers (3) with at least two container treatment machines (2₁, 2₂, 2₃), between which a transport device (7) for transporting said containers is arranged, wherein
when changing containers of type (A) to containers of type (B),
- a separating device (6₁, 6₂) is activated between said first and said second container treatment machine (2₁, 2₂, 2₃) which separates the flow of containers into a first and a second transport section (4₁, 4₂) after said first transport section (4₁) has run empty of containers (3) of type (A), where said first transport section adjoins said second transport section,
- container (3) of second type (B) are conveyed already in said first transport section (4₁) and backed up upstream of said separating device, while containers of first type (A) are conveyed out of said second transport section (4₂) to said second container treatment machine (2) and thereafter
- said separating device (6₁) between said first and said second transport section (4₁, 4₂) is deactivated in such a way that said backed-up and following containers (3) of type B are transported through said second transport section (4₂) to said second container treatment machine (2₂) the transport device having a plurality of individually controllable conveyors (8a, b, c) and the separating device (6₁, 6₂) comprising a conveyor which stops when the separating device (61, 62) is activated in such a way that
the containers (3) accumulate, wherein there is at least one separating device (6₁,6₂) comprising one of the conveyors
**characterized in that**
said conveyor (8) which acts as a separating device is arranged in the end region of said respective transport section or said transport path of said conveyor corresponds to said transport section
**in that**
a respective specific conveyor (8) is associated with a respective separating device (6₁, 6₂, 6ₙ₊ᵢ) respectively, so that said at least two transport sections (4₁ 4₂) each have a predetermined length and position, and several transport sections (4ₙ) are provided, each corresponding to said transport path of successive conveyors (8),
and **in that**
when said conveyors (8) have respectively run empty of containers (3) of the first type A, then said respectively emptied conveyor, which in the direction of transport is located at the foremost position behind said containers of type A, is stopped until said conveyor of containers of the first type A, that in the direction of transport is the following one, has run empty, which is then stopped again, where the preceding conveyor enters back into operation.

2. Method according to claim 1, **characterized in that** said separating device (6₁) between said first and said second transport section (4₁, 4₂) is deactivated after said second transport section (4₂) has run empty of containers (3) of the first type (A).

3. Method according to claim 1, **characterized in that** several separating devices (6₁, 6₂) are provided between said first and said second container treatment machine (2₁,2₂), where a further n^{th} + 2 transport path (4ₙ₊₂) is provided in particular downstream of said n^{th} + 1 transport section (4ₙ₊ᵢ), where an n^{th} + 1 separating device (6ₙ₊₁) between said n^{th} + 1 and said n^{th} + 2 transport section is activated after said n^{th} + 1 transport section (4ₙ₊₁) has run empty of containers (3) of the first type (A) and
- containers (3) of second type (B) are conveyed in said n^{th} + 1 transport section (4ₙ₊₂), while containers (3) of first type (A) are transported out of said n^{th} + 2 transport path (4ₙ₊₂) and preferably
- said n^{th} + 1 separating device is deactivated when said n^{th} + 2 transport section (4_{n+ 2}) has run empty of containers of the first type (A), where n ∈ N.

4. Method according to at least one of the claims 1or 2, **characterized in that**, while said separating device (6₁, 6₂, 6ₙ₊₁) is activated, containers (3) of second type (B)in back up upstream of said separating device (6₁, 6₂, 6ₙ₊ᵢ), and said backed-up second containers of type (B) pass through the entire second transport section when said separating device is deactivated.

5. Method according to at least one of the claims 1-4, **characterized in that** said separating device (6₁, 6₂) comprises a mechanical back-up element which is introduced into the flow of containers.

6. Method according to at least one of the claims 1-5, **characterized** said same transport device (7) is used without any changeover between said container treatment machines (2₁, 2₂) for the first type (A) and the second type (B).

7. Method according to at least one of the claims 1-6, **characterized in that** it is determined by way of at least one sensor (9) on said first and/or n^{th} + 1 transport section whether containers of first type (A) are disposed in said first and/or in said second transport section (4₁, 4₂).

8. Method according to at least one of the preceding claims, **characterized in that** said first container treatment machine (2₁) sends a signal for the end of production of containers of the first type (A) to a control device (10), and determines in dependence of said signal whether or not containers are disposed on said first and/or n^{th} + 1 transport section, where in particular the last container of the first type (A) is tracked.

9. Method according to at least one of claims 1-8, **characterized in that** if a control device (10) receives a disturbance signal from a container treatment machine arranged downstream of the separating device or from a transporter arranged downstream, an activated separating device is not deactivated.

10. Device for treating containers
with at least
- a first and a second container treatment machine (2₁, 2₂),
- a transport device (7) between said first and said second container treatment machine (2₁, 2₂), wherein
the transport device (7) has a plurality of individually controllable conveyors (8a, b, c),
- a separating device (6₁, 6₂) between said first and said second container treatment machine (2₁, 2₂) which, upon activation, separates the flow of containers into a first and a second transport section (4₁, 4₂) such
that said containers of a first type (A) can back up upstream of said separating device, where said first transport section adjoins said second transport section in the direction of transport
and wherein the separating means (61, 62) comprises a conveyor, and
- a control device (10) which is configured such that
it can activate said separating device (6₁, 6₂) between a first and a second transport section (4₁, 4₂) when there is a changeover from containers of a first type (A) to containers (3) of the second type (B), if no container of the first type (A) are disposed anymore on said first transport section (4₁), such that
said first transport section can already be fed containers (3) of the second type (B) while at the same time containers of the first type (A) can be conveyed out of said second transport section (4₂) without containers of the first type (A) and the second type (B) being mixed and
said control device can deactivate said separating device (6₁, 6₂) in such a way that said backed-up and following containers of the second type (B) can be transported through said second transport section (4₂) in the direction toward said second container treatment machine (2₂) wherein said conveyor stops upon activation of said separating device (6₁, 6₂) such that said containers (3) back up **characterized in that**
the device is designed in such a way that
the conveyor (8) acting as separating device is arranged in the end region of the respective transport section or the transport path of the conveyor corresponds to the transport section,
a respective specific conveyor (8) is assigned to a respective separating device (6₁, 6₂, 6ₙ₊₁) respectively, so that the at least two transport sections (4₁, 4₂) each have a predetermined length and position, and a plurality of transport sections (4ₙ) are provided which each correspond to the transport section of successive conveyors (8)
and **in that** when the conveyors (8) of containers (3) of the first type A have each been emptied, the respectively emptied conveyor, which is located at the foremost position behind the containers of the first type A in the transport direction, is stopped until the following conveyor of containers of the first type A in the transport direction has been emptied, which conveyor is then stopped again, the previous conveyor being put into operation again .

11. Device according to claim 10, **characterized in that** said device comprises several separating devices (6₁, 6₂) between said first and second container treatment machine.

12. Device according to claim 10 or 11, **characterized in that** said device further comprises a first detection device which can detect whether said first transport section (4₁) has emptied during the product change and generates a signal when said first transport section (4₁) has run empty, on the basis of which said control device (10) activates said separating device (6₁, 6₂).

13. Device according to at least one of the claims 10-12, **characterized in that** said device comprises a second detection device which can detect whether said second transport section (4₂) has emptied and either generates a signal on the basis of which said control device deactivates said separating device (6₁, 6₂) when said second transport path has emptied, or generates a respective signal when said second transport section has emptied or
generates a corresponding signal on the basis of which the control device deactivates the separating device (G₁, G₂) when the second transport section has run empty and the second container treatment machine generates a signal that it is ready to handle the container of the second type (B).

14. Device according to at least one of the claims 10-13, **characterized in that** a heating or cooling device (12) is arranged between said first and second container treatment machine (2₁, 2₂) and preferably a separating device (6₁) is arranged upstream of said heating or cooling device (12) and/or downstream of said heating or cooling device (12).

15. Apparatus according to at least one of claims 10 -14, **characterized in that** the first container treatment machine is at least one machine of the following group: stretch blow molder, filler, labeler, packer, palletizer, pusher, and
the second container handling machine is at least one machine of the following groups: stretch blow molder, filler, labeler, packer, palletizer, pusher,
preferably the first machine is a block comprising a blow molder and a labeler and a filler and a closer and the second container handling machine is a packer or a palletizer or
the first container treatment machine is a packer and the second container handling machine is a palletizer.

## Revendications

1. Procédé de traitement de récipients (3) avec au moins deux machines de traitement de récipients (2₁, 2₂, 2₃) entre lesquelles est agencé un dispositif de transport (7) permettant de transporter les récipients,
dans lequel :
lors du remplacement de récipients d'une première catégorie (A) par des récipients d'une deuxième catégorie (B) :
- un dispositif de séparation (6₁, 6₂) est activé entre les première et deuxième machines de traitement de récipients (2₁, 2₂, 2₃), qui sépare le flux de récipients en des première et deuxième sections de transport (4₁, 4₂) après que la première section de transport (4₁) a été vidée de récipients (3) de la première catégorie (A), dans lequel la première section de transport est adjacente à la deuxième section de transport ;
- des récipients (3) de la deuxième catégorie (B) sont déjà transportés dans la première section de transport (4₁) et accumulés en amont du dispositif de séparation pendant que des récipients de la première catégorie (A) sont transportés à partir de la deuxième section de transport (4₂) vers la deuxième machine de traitement des récipients (2) ;
et ensuite
- le dispositif de séparation (6₁) est désactivé entre les première et deuxième sections de transport (4₁, 4₂) de telle manière que les récipients (3) de la deuxième catégorie (B) accumulés et successeurs sont transportés vers la deuxième machine de traitement de récipients (2₂) en passant par la deuxième section de transport (4₂), dans lequel le dispositif de transport présente plusieurs transporteurs (8a, b, c) pouvant être commandés individuellement et le dispositif de séparation (6₁, 6₂) comprend un transporteur qui s'arrête lors de l'activation du dispositif de séparation (6₁, 6₂) de telle manière que
les récipients (3) s'accumulent, dans lequel au moins un dispositif de séparation (6₁, 6₂) comprend l'un des transporteurs,
**caractérisé en ce que,**
le transporteur (8) servant de dispositif de séparation est agencé dans la région d'extrémité de la section de transport respective, ou **en ce que** le trajet de transport du transporteur correspond à la section de transport,
**en ce que**
respectivement un transporteur (8) déterminé est associé à un dispositif de séparation (6₁, 6₂, 6ₙ₊₁) respectif, de sorte que les au moins deux sections de transport (4₁, 4₂) présentent respectivement une longueur et une position prédéterminées et plusieurs sections de transport (4ₙ) correspondant respectivement au trajet de transport de transporteurs (8) successifs sont prévues,
et **en ce que**
ensuite, lorsque les transporteurs (8) de récipients (3) de la première catégorie (A) sont respectivement vidés, le transporteur respectivement vidé qui se trouve le plus en amont derrière les récipients de la première catégorie (A) dans la direction de transport est arrêté jusqu'à ce que le transporteur de récipients de la première catégorie (A) suivant dans la direction de transport soit vidé, celui-ci étant à son tour arrêté et le transporteur précédent remis en service.

2. Procédé selon la revendication 1, **caractérisé en ce que**, après que la deuxième section de transport (4₂) a été vidée de récipients (3) de la première catégorie (A), le dispositif de séparation (6₁) est désactivé entre les première et deuxième sections de transport (4₁,4₂).

3. Procédé selon la revendication 1, **caractérisé en ce que** plusieurs dispositifs de séparation (6₁, 6₂) sont prévus entre les première et deuxième machines de traitement de récipients (2₁,2₂), dans lequel un autre n+2^{ème} trajet de transport (4ₙ₊₂) est en particulier prévu après la n+1^{ème} section de transport (4ₙ₊₁), dans lequel un n+1 ^{ème} dispositif de séparation (6ₙ₊₁) est activé entre les n+1^{ème} et n+2^{ème} sections de transport après que la n+1^{ème} section de transport (4ₙ₊₁) a été vidée de récipients (3) de la première catégorie (A) et
- des récipients (3) de la deuxième catégorie (B) sont transportés dans la n+1^{ème} section de transport (4ₙ₊₂) pendant que des récipients (3) de la première catégorie (A) sont transportés hors du n+2^{ème} trajet de transport (4ₙ₊₂) et de manière préférée
- le n+1^{ème} dispositif de séparation est désactivé lorsque la n+2^{ème} section de transport (4ₙ₊₂) est vidée des récipients de la première catégorie (A), dans lequel n ∈ N.

4. Procédé selon au moins l'une quelconque des revendications 1 ou 2, **caractérisé en ce que**, pendant que le dispositif de séparation (6₁, 6₂, 6ₙ₊₁) est activé, des récipients (3) de la deuxième catégorie (B) s'accumulent en amont du dispositif de séparation (6₁, 6₂, 6ₙ₊₁), et les récipien ts accumulés de la deuxième catégorie (B) traversent la totalité de la deuxième section de transport lors de la désactivation du dispositif de séparation.

5. Procédé selon au moins l'une quelconque des revendications 1 à 4, **caractérisé en ce que** le dispositif de séparation (6₁, 6₂) comprend un élément d'accumulation mécanique qui est introduit dans le flux de récipients.

6. Procédé selon au moins l'une quelconque des revendications 1 à 5, **caractérisé en ce que** le même dispositif de transport (7) est utilisé sans changement entre les machines de traitement de récipients (2₁, 2₂) destinées à la première catégorie (A) et à la deuxième catégorie (B).

7. Procédé selon au moins l'une quelconque des revendications 1 à 6, **caractérisé en ce qu'**au moins un capteur (9) au niveau de la première et/ou de la n+1^{ème} section de transport détermine si des récipients de la première catégorie (A) se trouvent dans la première et/ou la deuxième section de transport (4₁, 4₂).

8. Procédé selon au moins l'une quelconque des revendications précédentes, **caractérisé en ce que** la première machine de traitement de récipients (2₁) envoie un signal pour la fin de la production de récipients de la première catégorie (A) à un dispositif de commande (10) et détermine, en fonction du signal, si des récipients se trouvent sur la première et/ou la n+1^{ème} section de transport, dans lequel en particulier le dernier récipient de la première catégorie (A) est suivi.

9. Procédé selon au moins l'une quelconque des revendications 1 à 8, **caractérisé en ce que**, lorsqu'un dispositif de commande (10) reçoit un signal perturbateur émanant d'une machine de traitement de récipients agencée en aval du dispositif de séparation ou émanant d'un transporteur agencé en aval, un dispositif de séparation activé n'est pas désactivé.

10. Dispositif de traitement de récipients (3)
avec au moins
- des première et deuxième machines de traitement de récipients (2₁, 2₂),
- un dispositif de transport (7) entre les première et deuxième machines de traitement de récipients (2₁, 2₂), dans lequel
le dispositif de transport (7) présente plusieurs transporteurs (8a, b, c) pouvant être commandés individuellement,
- un dispositif de séparation (6₁, 6₂) entre les première et deuxième machines de traitement de récipients (2₁, 2₂) qui, lorsqu'il est activé, peut séparer le flux de récipients entre les première et deuxième machines de traitement de récipients en des première et deuxième sections de transport (4₁,4₂) de telle manière que
- les récipients de la première catégorie (A) peuvent s'accumuler en amont du dispositif de séparation, dans lequel la première section de transport est adjacente à la deuxième section de transport dans la direction de transport,
et dans lequel le dispositif de séparation (6₁, 6₂) comprend un transporteur, et
- un dispositif de commande (10) conçu de telle manière que,
lors du remplacement de récipients de la première catégorie (A) par des récipients (3) de la deuxième catégorie (B),
il peut activer le dispositif de séparation (6₁, 6₂) entre des première et deuxième section de transport (4₁, 4₂) lorsqu'il n'y a plus de récipients de la première catégorie (A) sur la première section de transport (4₁), de telle manière que
des récipients (3) de la deuxième catégorie (B) peuvent déjà être amenés à la première section de transport pendant que des récipients de la première catégorie (A) peuvent être transportés simultanément hors de la deuxième section de transport (4₂) sans mélange des récipients de la première catégorie (A) et de la deuxième catégorie (B), et
le dispositif de commande peut désactiver le dispositif de séparation (6₁, 6₂) de telle manière que les récipients de la deuxième catégorie (B) accumulés et successeurs peuvent être transportés en direction de la deuxième machine de traitement de récipients (2₂) en passant par la deuxième section de transport (4₂), dans lequel le transporteur s'arrête lors de l'activation du dispositif de séparation (6₁, 6₂) de telle manière que les récipients (3) s'accumulent, **caractérisé en ce que**
le dispositif est conçu de telle manière que
le transporteur (8) servant de dispositif de séparation est agencé dans la région d'extrémité de la section de transport respective ou le trajet de transport du transporteur correspond à la section de transport,
respectivement un transporteur (8) déterminé est associé à un dispositif de séparation (6₁, 6₂, 6ₙ₊₁) respectif, de sorte que les au moins deux sections de transport (4₁, 4₂) présentent respectivement une longueur et une position prédéterminées et plusieurs sections de transport (4ₙ) correspondant respectivement au trajet de transport de transporteurs (8) successifs sont prévues,
et, lorsque les transporteurs (8) de récipients (3) de la première catégorie (A) sont respectivement vidés, le transporteur respectivement vidé qui se trouve le plus en amont derrière les récipients de la première catégorie A dans la direction de transport est arrêté jusqu'à ce que le transporteur de récipients de la première catégorie A qui se trouve à la suite dans la direction de transport soit vidé, celui-ci étant à son tour arrêté et le transporteur précédent remis en service.

11. Dispositif selon la revendication 10, **caractérisé en ce que** le dispositif présente plusieurs dispositifs de séparation (6₁, 6₂) entre les première et deuxième machines de traitement de récipients.

12. Dispositif selon la revendication 10 ou 11, **caractérisé en ce que** le dispositif présente en outre un premier dispositif de détection qui peut détecter si la première section de transport (4₁) est vidée lors du remplacement de produit et qui, lorsque la première section de transport (4₁) est vidée, génère un signal sur la base duquel le dispositif de commande (10) active le dispositif de séparation (6₁, 6₂).

13. Dispositif selon au moins l'une quelconque des revendications 10 à 12, **caractérisé en ce que** le dispositif présente un deuxième moyen de détection qui peut détecter si la deuxième section de transport (4₂) est vidée et, soit génère un signal sur la base duquel le dispositif de commande désactive le dispositif de séparation (6₁, 6₂) lorsque la deuxième section de transport est vidée, soit
génère un signal correspondant, sur la base duquel le dispositif de commande désactive le dispositif de séparation (G₁, G₂), lorsque la deuxième section de transport est vidée et la deuxième machine de traitement de récipients génère un signal indiquant qu'elle est prête à traiter le récipient de la deuxième catégorie (B).

14. Dispositif selon au moins l'une quelconque des revendications 10 à 13, **caractérisé en ce qu'**un dispositif de chauffage ou de refroidissement (12) est agencé entre les première et deuxième machines de traitement de récipients (2₁, 2₂) et de manière préférée un dispositif de séparation (6₁) est agencé en amont du dispositif de chauffage ou de refroidissement (12) et/ou en aval du dispositif de chauffage ou de refroidissement (12).

15. Dispositif selon au moins l'une quelconque des revendications 10 à 14, **caractérisé en ce que** la première machine de traitement de récipients est au moins une machine du groupe ci-dessous : machine de moulage par soufflage avec étirage, machine de remplissage, étiqueteuse, emballeuse, machine à palettiser, dispositif pousseur, et
la deuxième machine de traitement de récipients est au moins une machine du groupe ci-dessous : machine de moulage par soufflage avec étirage, machine de remplissage, étiqueteuse, emballeuse, machine à palettiser, dispositif pousseur,
de manière préférée, la première machine est un bloc comprenant une machine de soufflage et une étiqueteuse et une machine de remplissage et un dispositif de fermeture et la deuxième machine de traitement de récipients est une emballeuse ou une machine à palettiser ; ou
la première machine de traitement de récipients est une emballeuse et la deuxième machine de traitement de récipients est une machine à palettiser.
